(19) **Europäisches Patentamt**
**European Patent Office**
**Office européen des brevets**

(11) **EP 4 254 354 B1**

(12) **EUROPEAN PATENT SPECIFICATION**

(45) Date of publication and mention
of the grant of the patent:
**22.01.2025  Bulletin 2025/04**

(51) International Patent Classification (IPC):
**G06V 10/40** (2022.01)    **G06V 10/74** (2022.01)
**G06T 7/30** (2017.01)

(21) Application number: **22305384.4**

(22) Date of filing: **28.03.2022**

(52) Cooperative Patent Classification (CPC):
**G06V 10/74; G06T 7/33; G06V 10/454;**
G06T 2207/20081; G06T 2207/20084

(54) **SYSTEM AND METHOD USING PYRAMIDAL AND UNIQUENESS MATCHING PRIORS FOR IDENTIFYING CORRESPONDENCES BETWEEN IMAGES**

SYSTEM UND VERFAHREN MIT PYRAMIDEN- UND EINDEUTIGKEITSABGLEICHSPRIORVERTEILUNG ZUR IDENTIFIZIERUNG VON ENTSPRECHUNGEN ZWISCHEN BILDERN

SYSTÈME ET PROCÉDÉ UTILISANT DES ANTÉCÉDENTS DE CORRESPONDANCE PYRAMIDALE ET D'UNICITÉ POUR IDENTIFIER DES CORRESPONDANCES ENTRE IMAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.10.2023  Bulletin 2023/40**

(73) Proprietor: **Naver Corporation**
**Seongnam-si, Gyeonggi-do 13561 (KR)**

(72) Inventors:
• **REVAUD, Jérôme**
  **38240 Meylan (FR)**
• **LEROY, Vincent**
  **38190 Laval (FR)**
• **WEINZAEPFEL, Philippe**
  **38330 Montbonnot-Saint-Martin (FR)**
• **CHIDLOVSKII, Boris**
  **38240 Meylan (FR)**

(74) Representative: **Grünecker Patent- und Rechtsanwälte**
**PartG mbB**
**Leopoldstraße 4**
**80802 München (DE)**

(56) References cited:
**US-A1- 2022 028 110**

• **REVAUD JEROME ET AL: "DeepMatching: Hierarchical Deformable Dense Matching", ARXIV.ORG, CORNELL UNIVERSITY LIBRARY, 201 OLIN LIBRARY CORNELL UNIVERSITY ITHACA, NY 14853, vol. 120, no. 3, 29 April 2016 (2016-04-29), pages 300 - 323, XP036047698, DOI: 10.1007/S11263-016-0908-3**
• **WEINZAEPFEL PHILIPPE ET AL: "DeepFlow: Large Displacement Optical Flow with Deep Matching", PROCEEDINGS OF THE IEEE INTERNATIONAL CONFERENCE ON COMPUTER VISION (ICCV), IEEE, 1 December 2013 (2013-12-01), pages 1385 - 1392, XP032573088, ISSN: 1550-5499, [retrieved on 20140228], DOI: 10.1109/ICCV.2013.175**

## EP 4 254 354 B1

**Description**

**BACKGROUND**

**Field of the Application**

The present disclosure relates to a neural network for image analysis, in particular, to a system, method and computer-readable medium for unsupervised learning of the neural network for computing local image descriptors for determining whether a pair of images depict the same scene, and applications therefor.

**Description of the Related Art**

One of the persistent challenges of computer-based image analysis is the identification of corresponding pixels or portions of two images. This image analysis problem is central to numerous computer vision tasks, such as large-scale visual localization, object detection, pose estimation, Structure-from-Motion (SfM), 3D reconstruction and Simultaneous Localization and Mapping (SLAM). In all these tasks, it is necessary to identify corresponding portions of two images depicting at least partially the same visual content. Two different images representing the same visual content can differ in a wide range of parameters, such as the viewing angle of the depicted motif, position of the motif within the image frame, the camera, lens and sensor type used to capture the image, lighting and weather conditions, focal length, and/or sharpness, to name just a few. While a human can, even for images that differ markedly from each other, easily identify image parts that show the same feature of a depicted object or person, this task is actually rather complex due to severe differences in geometry, color and contrast between the images. Solving this problem with computer-based systems is an ongoing subject of research in the field of artificial intelligence.

An important component of many approaches to addressing the issue of identifying correspondences between images are local image descriptors (also called pixel descriptors), which are extracted from an image. A local image descriptor characterizes a neighborhood of a pixel of the image and provides a computer-processable data structure that enables a computing system to compare local environments of pixels by determining correlations between pixels based on their local image descriptors. Local image descriptors can be extracted from an image sparsely (i.e. only for selected keypoints of the image) or densely (i.e. for each pixel of the image). The process of extracting (i.e. computing) local image descriptors from an image is crucial for the quality of the identified correspondences. Existing learning-based approaches for extracting local image descriptors significantly outperform standard handcrafted methods such as SIFT (Lowe, "Object recognition from local scale invariant features", ICCV, 1999) or ORB (Rublee et al., "ORB: an efficient alternative to SIFT or SURF", ICCV, 2011). Learning-based approaches are often based on training procedures relying on the existence of annotated training data sets that include a large number of image pairs for which pixel-level correspondences (i.e. dense ground-truth correspondences) are known. These correspondences are usually obtained by considering a large collection of images for a given landmark and building a Structure-from-Motion reconstruction (Li and Snavely, "Megadepth: Learning single view depth prediction from internet photos", CVPR, 2018). This pipeline fails in many cases, yielding an unfathomable bottleneck to the kind of ground-truth data that can be generated. This limits the enormous potential of available image data to only those image pairs for which ground-truth labels can be efficiently derived. Since limited training data sets have a direct negative impact on the training results, it would be beneficial to overcome these restrictions in order to fully exploit the potential of available image pairs as training data sets.

A first step to the solution of this problem is provided by pure self-supervised learning approaches, which still rely on ground-truth labeled correspondences between images but can generate those correspondences as part of the approach with limited effort. Purely self-supervised learning approaches use synthetically generated image pairs in the training phase, where the second image is obtained by applying known transformations to the first image, such as a random homography, color jittering or even style transfer. However, homographies and the like cannot model the full range of possible transformations between real image pairs. In parallel, weakly-supervised methods have been proposed that demonstrate the ability to train from, for example, known camera poses (Wang et al., "Learning feature descriptors using camera pose supervision", ECCV, 2020). However, this is only achievable through the use of complex acquisition setups that require the deployment of sensors based on different modalities (IMU or GPS), or again, resort to SfM reconstructions. Recently, unsupervised learning of local descriptors has been introduced in the form of cycle consistency constraints across multiple images (Truong et al., "Warp consistency of unsupervised learning of dense correspondences", ICCV, 2021; and Zhou et al., "Joint image set alignment by weaving consistent, pixel-wise correspondences, CPVR, 2015), either requiring extraction of features on more images for training, or costly iterative training of descriptors and expensive model fitting (Yang et al., "MONET: multiview semi-supervised keypoint detection via epipolar divergence, ICCV, 2019).

US 2022/028110 A1 relates to visual odometry, and discloses training of a neural network for computing interest point locations and descriptors in input images.

"DeepMatching: Hierarchical Deformable Dense Matching" (REVAUD JEROME ET AL) relates to the computation of correspondences using descriptors.

## SUMMARY

In order to overcome the above deficiencies, a computer-implemented method for learning local descriptors without supervision is presented. The approach of the method is to jointly enforce two matching priors: local consistency and uniqueness of the matching. The former is based on the observation that two neighboring pixels of one image will likely match with two pixels forming a similar neighboring pair in the other image, up to a small deformation. It is assumed that this generally holds true at any scale. In disclosed embodiments, this prior is efficiently enforced through a pyramidal structure. A pyramidal non-parametric module extracts higher-level correspondences, enforcing the local consistency matching prior by design. The uniqueness prior is based on the observation that one pixel from the first image can correspond to at most one pixel in the second image. This property is enforced on high-level correspondences via a uniqueness matching loss. It is naturally propagated to low-level pixel correspondences, thanks to the pyramidal hierarchical structure. As a result, the combination of a local consistency prior and a uniqueness prior enables an effective learning of local image descriptors without supervision.

The resulting training method of a neural network for determining local image descriptors does not require any supervision, e.g. in the form of ground-truth correspondences between training images. The trained neural network is adapted to extract optimal local image descriptors. Extracted optimal local image descriptors (also referred to as PUMP descriptors) are configured to identify correspondences between portions of different images, including scenes depicting the same visual content but having differing image parameters, for example, a pair of images of the same scene that differ in viewpoint or lighting conditions.

In an embodiment, a computer-implemented method of unsupervised neural network training for learning of local image descriptors is provided. The method comprises the steps of: obtaining a pair of images depicting a same scene, the pair of images including a first image with a first pixel grid and a second image with a second pixel grid, wherein the first pixel grid differs from the second pixel grid; applying a neural network having an initial set of parameters to the first image and the second image to generate a feature map $F_1$ for the first image and a feature map $F_2$ for the second image, $F_1$ comprising a first grid of local image descriptors and $F_2$ comprising a second grid of local image descriptors, wherein each local image descriptor in the first grid of local image descriptors corresponds to a respective pixel within the first pixel grid and each local image descriptor in the second grid of local image descriptors corresponds to a respective pixel within the second pixel grid; determining an initial correlation volume $C^0$ based on $F_1$ and $F_2$, wherein $C^0$ comprises local **correlations** of pixels of the first pixel grid with pixels of the second pixel grid, wherein each local correlation between a pixel of the first pixel grid and a pixel of the second pixel grid is determined based on the local image descriptors corresponding to the correlated pixels; determining a high-level correlation volume $C^L$ based on $C^0$ by iterative pyramid construction, wherein $C^L$ comprises aggregated high-level correlations between iteratively constructed high-level patches of the first and second pixel grids, each patch being a rectangular portion of the respective pixel grid; determining a uniqueness matching loss for $F_1$ and $F_2$ based on $C^L$, the uniqueness matching loss providing a measure for a deviation of $F_1$ and $F_2$ from optimal feature maps, wherein the deviation from optimal feature maps is low if, based on the high-level correlations in $C^L$, each high-level patch of the first and the second pixel grids has a unique match among the high-level patches of the respective other pixel grid; and training the neural network by minimizing a loss function based on the uniqueness matching loss to generate an optimized set of parameters, thereby generating a trained neural network for determining optimal local image descriptors.

In another embodiment, a computer-implemented method for identifying correspondences between a pair of input images is provided. The method comprises: receiving the input image pair including a first input image and a second input image; processing the input image pair with the trained neural network for determining optimal local image descriptors, the trained neural network generating local image descriptors for the input image pair described above; extracting correspondences between portions of the input image pair based on the image descriptors, each extracted correspondence mapping a portion of the first input image to a portion of the second input image; determining with the extracted correspondences whether a true match exists between the input image pair, a true match existing between the input image pair when corresponding portions of the image pair depict a same scene; and outputting whether a true match exists between the image pair.

In yet another embodiment, a system comprising a processing unit and a memory connected to the processing unit is provided. The memory comprises computer-executable instructions that, when executed by the processing unit, cause the processing unit to perform the computer-implemented method of unsupervised neural network training for learning of local image descriptors or the computer-implemented method for identifying correspondences between a pair of input images described above.

According to a further embodiment, one or more computer-readable media having computer-readable instructions stored thereon are provided. When executed by a processing unit, the computer-readable instructions cause the processing unit to perform the method of unsupervised neural network training for learning of local image descriptors or the computer-implemented method for identifying correspondences between a pair of input images described above.

## BRIEF DESCRIPTION OF THE DRAWINGS

The accompanying drawings are incorporated into and form a part of the specification for the purpose of explaining the principles of the embodiments. The drawings are not to be construed as limiting the embodiments to only those illustrated therein. Further features and advantages will become apparent from the following and more particularly from the description of the embodiments, as illustrated in the accompanying drawings, wherein:

Figure 1 illustrates a procedure for training a neural network for determining correspondences between images of an image pair according to an embodiment of the invention.

Figure 2 illustrates a procedure for determining correspondences between images of an image pair by applying a trained neural network to the images according to an embodiment of the invention.

Figure 3 illustrates the correlation module of Figure 1 according to an embodiment of the invention.

Figure 4 illustrates the construction of higher-level image patches from lower-level image patches in the iterative pyramid construction of Figure 3 according to an embodiment of the invention.

Figure 5 is a functional block diagram illustrating a method of training a neural network according to an embodiment of the invention.

Figure 6 is a functional block diagram illustrating a method for determining correspondences between images of an image pair according to an embodiment of the invention.

Figure 7 is a series of graphs showing a comparison of experimental sparse matching evaluation results on the HPatches data set for a number of different state-of-the-art techniques with an implementation of the present invention.

Figure 8 illustrates an example system architecture in which the disclosed methods may be performed.

## DETAILED DESCRIPTION

Described herein are systems and methods for unsupervised neural network training for learning of local image descriptors. For purposes of explanation, numerous examples and specific details are set forth in order to provide a thorough understanding of the described embodiments. The illustrative embodiments will be described with reference to the drawings, wherein like elements and structures are indicated by like reference numbers.
The present invention relates to a method, a system and a computer-readable medium for unsupervised neural network training for learning of image descriptors that are adapted for the determination of corresponding portions in images showing the same visual content. The present invention achieves unsupervised neural network training for learning of image descriptors by configuring a neural network such that the neural network, when applied to a given image $I$ of dimension H $\times$ W, extracts a highly discriminative yet robust local image descriptor for each pixel of $I$. In order to obtain a neural network able to extract such local image descriptors, the neural network must first be "trained". Local image descriptors extracted from an image by a neural network trained according to embodiments of the invention are denoted PUMP descriptors (PUMP: Pyramidal and Uniqueness matching Priors).

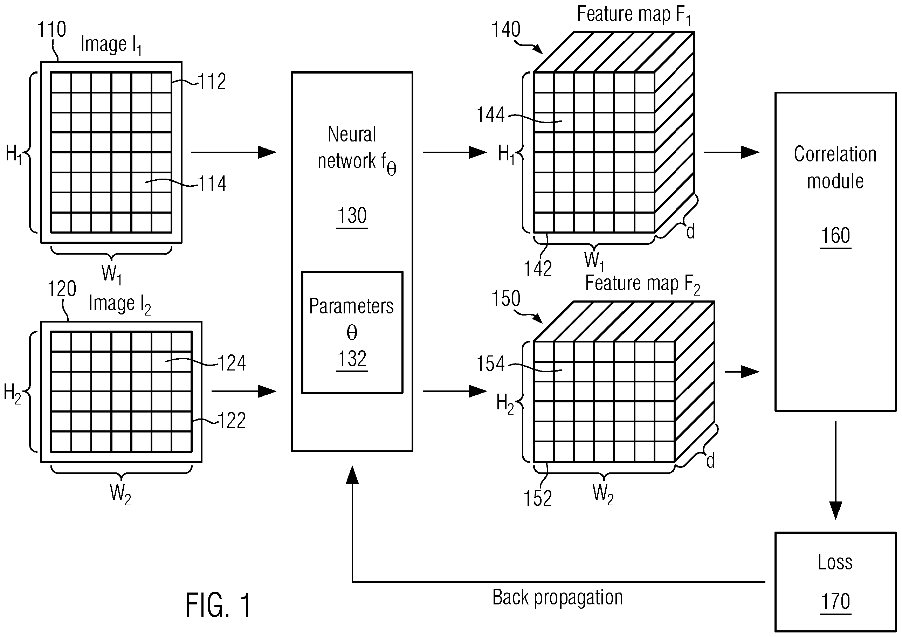

Figure 1 illustrates a training procedure (or training phase) for a neural network $f_\theta$ 130 according to an embodiment of the invention. The neural network $f_\theta$ 130 has a plurality of internal, learnable parameters $\theta$ 132. The training phase of neural network 130 aims at optimizing the parameters of the neural network by training it on a training set of image pairs. In supervised learning approaches, it is necessary to know the expected result for each image pair of the training set (e.g. the corresponding portions of the images of each image pair of the training set are known in terms of binary ground-truth labels for each image pair). However, the present invention relates to an unsupervised learning approach, which in this context refers to learning that does not require any supervision (e.g. in the form of known ground-truth correlations between images). The only condition which has to be met by a training data set suitable for unsupervised learning according to embodiments of the present invention is that the training data set provide pairs of images depicting at least partially the same visual content. The training phase starts with an initial set of values for the parameters 132. There are several options for choosing the initial set of values. One possibility is to determine the initial set in a preparation step, e.g. by performing an initial training **using a** state-of-the-art training method for the neural network. Another option is choosing a common value for all parameters $\theta$ 132. In a specific embodiment, the initial set of values includes a random value for each parameter of the plurality of parameters $\theta$ 132.

In a first step the neural network with the initial set of values for the parameters 132 is applied to two different images $I_1$ 110 and $I_2$ 120 of an image pair. Both images of the pair depict at least partially the same visual content (e.g. a same scene, a same object, a same person, or a same architectural structure). Image $I_1$ 110 may comprise a pixel grid 112 with height $H_1$ and width $W_1$, including $H_1 \times W_1$ individual pixels 114. Image $I_2$ 120 may comprise a pixel grid 122 with height $H_2$ and width $W_2$ including $H_2 \times W_2$ individual pixels 124. Although both images depict the same visual content, pixel grids 112 and 122 may differ from each other because e.g. the images were taken under different lighting conditions, from different camera positions or viewing angles, with different cameras, or using different sensors or lenses.

Mathematically, the neural network 130 can be described as a function $f_\theta : I \to F_I$ where $I$ denotes an image and $F_I \in \mathbb{R}^{H \times W \times d}$ is a $d$-dimensional feature map, which can be viewed as a grid of dense local image descriptors. The term dense in this context denotes a one-to-one relation between the pixels of the image $I$ and the local image descriptors of the grid of image descriptors.

Accordingly, applying neural network 130 to image $I_1$ 110 generates or extracts a feature map $F_1$ 140 from the image. Feature map 140 comprises a grid of local image descriptors with height $H_1$ and width $W_1$, including $H_1 \times W_1$ individual local image descriptors 144, wherein each image descriptor 144 corresponds to a pixel 114 in pixel grid 112 and is represented by a d-dimensional vector in $\mathbb{R}^d$. Similarly, applying neural network 130 to image $I_2$ 120 generates a feature map $F_2$ 150 from the image. Feature map 150 comprises a grid of local image descriptors with height $H_2$ and width $W_2$, including $H_2 \times W_2$ individual local image descriptors 154, wherein each image descriptor 154 corresponds to a pixel 124 in pixel grid 112 and is represented by a d-dimensional vector in $\mathbb{R}^d$.

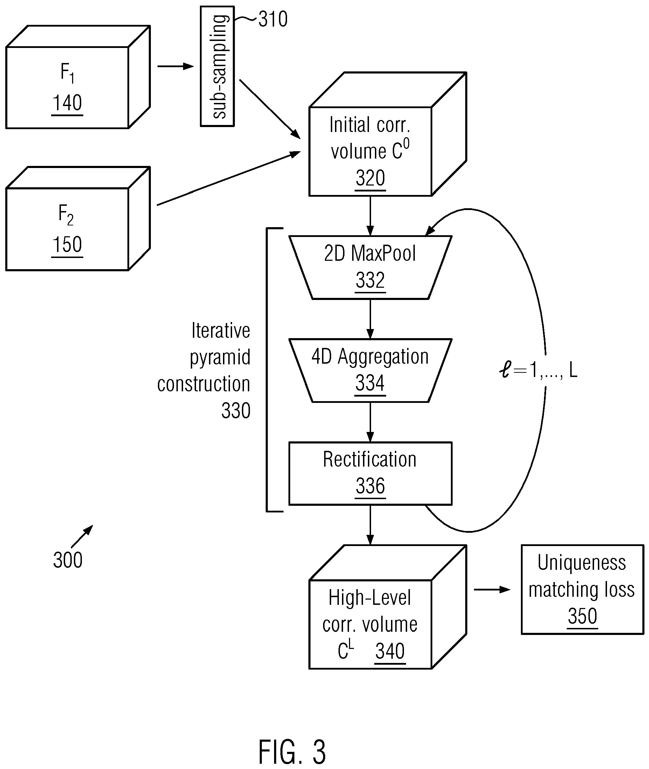

A correlation module 160 receives feature maps $F_1$ 140 and $F_2$ 150 and performs a series of steps on the received feature maps to determine loss 170. The loss can either be determined from a single image pair or as an average over a plurality of image pairs. In the latter case, the neural network is applied to the images of each of the plurality of image pairs in the same way as described for $I_1$ and $I_2$, thereby generating a respective feature map for each image. The correlation module 160 determines an individual loss for each image pair based on the feature maps of the respective images, and from the plurality of individual losses for the individual image **pairs, an** average loss for the plurality of image pairs. The specific steps performed by correlation module 160 are explained in more detail below with reference to Figure 3.

In machine learning, a loss denotes the value of a loss function (also called "cost function"), which is a function that maps an event or values of one or more variables onto a real number representing some "cost" associated with the event. The aim of the training phase is to modify the internal, learnable parameters $\theta$ 132 of the neural network $f_\theta$ 130 so that they minimize the loss 170 (i.e. the value of the loss function). This optimization of the loss function (which must be convergent towards a minimum) is performed by back-propagation of so called "loss gradients", which are obtained from the partial derivatives of the loss function with respect to the learnable parameters $\theta$ 132 of the neural network $f_\theta$ 130. These loss gradients are "back-propagated" to the respective learnable parameters $\theta$ 132 in that they are used to modify (or adapt or update) the learnable parameters $\theta$ 132 of the neural network $f_\theta$ 130 to produce a lower loss 170 at the next iteration of the training phase.

At the next iteration, the neural network 130 generates modified local feature maps $F_1$ 140 and $F_2$ 150, comprising grids of modified local image descriptors for the images $I_1$ and $I_2$, where the feature maps and thereby the local feature descriptors are computed with the modified learnable parameters $\theta$ 132. These modified local feature descriptors are better suited for identifying corresponding portions in images of an image pair, leading to a lower loss 170 and to a smaller adaptation of the learnable parameters $\theta$ 132 at the next back-propagation of the loss gradients, until the loss function converges towards a minimum loss 170 and no adaptation of the learnable parameters 132 is necessary anymore. Once the loss function has converged, neural network 130 has been successfully trained, and it can then be applied to image pairs for identifying corresponding portions in the images of the image pair.

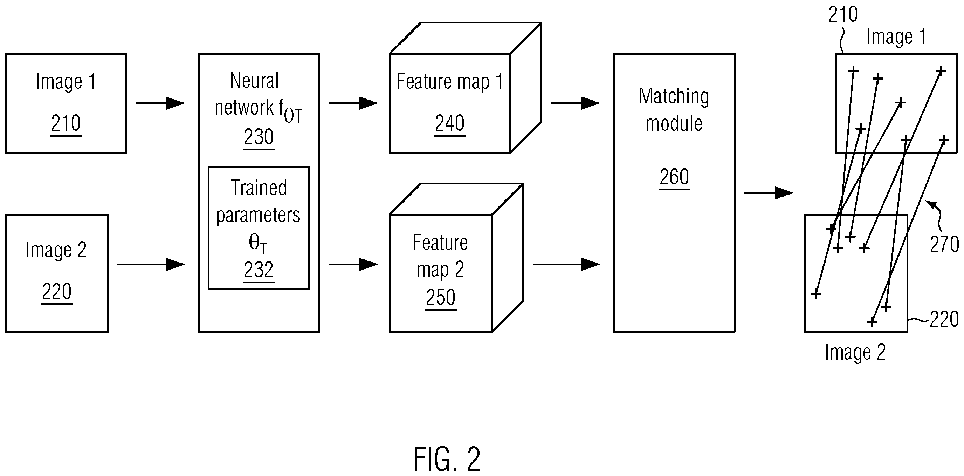

Figure 2 illustrates a process of determining corresponding portions of images of an image pair according to an embodiment of the invention. A trained neutral network $f_{\theta_T}$ 230 with a plurality of internal parameters $\theta_T$ may be the result of a training phase as described with reference to Figure 1. The trained neural network 230 is applied to images 210 and 220 to generate feature map 240 for image 210 and feature map 250 for image 220. The process of applying the trained neural network 230 to an image and generating a feature map for the image is equivalent to the respective process in the training phase as described with reference to Figure 1. Accordingly, generated feature maps 240 and 250 each comprise a grid of local image descriptors including a plurality of individual PUMP descriptors corresponding to individual pixels of the image from which the feature map has been generated. Feature maps 240 and 250 are subsequently provided to matching module 260, which is configured to extract correspondences 270 between portions of image 210 and image 220 based on the PUMP descriptors of feature maps 240 and 250. Each correspondence 270 maps a portion (e.g. a pixel or a patch) of image 210 to a portion (e.g. a pixel or a patch) of image 220. A correspondence defines a true match if the corresponding portions of images 210 and 220 depict the same feature of the depicted scene.

Matching module 260 may implement any suitable technique for determining correspondences 270 for images 210 and 220. In an embodiment, matching module 260 applies a DeepMatching algorithm (Revaud et al., "Hierarchical deformable dense matching", IJCV, 2016) to feature maps 240 and 250 to extract dense or quasi-dense correspondences 270 between portions of images 210 and 220. The DeepMatching algorithm is adapted to the present invention by replacing the basic descriptors of DeepMatching by the PUMP descriptors of feature maps 240 and 250. In embodiments with quasi-dense correspondence extraction one of images 210 and 220 is split in atomic patches (e.g. in non-overlapping 4x4 pixel patches) and one correspondence 270 is output for each atomic patch.

In alternative embodiments, matching module 260 applies sparse keypoint-based matching techniques to feature maps 240 and 250 to extract correspondences 270 between keypoints of images 210 and 220. These techniques may include SIFT (Lowe, "Object recognition from local scale invariant features", ICCV, 1999), ORB (Rublee et al., "ORB: an efficient alternative to SIFT or SURF", ICCV, 2011), R2D2 (Revaud et al., "R2D2: repeatable and reliable detector and descriptor", NeurIPS, 2019), or SuperPoint (DeTone et al., "Self-supervised interest point detection and description", CVPR Workshops, 2018). Regardless of the specific technique applied to extract correspondences between images 210 and 220, the applied technique is adapted to the present invention by replacing the basic descriptor of the respective technique with the PUMP descriptors of feature maps 240 and 250.

The performance of the correspondence extraction as well as the quality of the determined correspondences depend on the suitability of the PUMP descriptors, which result from applying trained neural network 230 to images 210 and 220. Since the training of the neural network is performed by back-propagation based on loss 170, the outcome of the training phase, namely trained neural network 230 and by extension the PUMP descriptors, depend on the specific method of determining loss 170 and in particular on the steps performed by correlation module 160 to determine loss 170. Figure 3 illustrates correlation module 300 for determining a loss during the training phase for neural network 130. Correlation module 300 may be an embodiment of correlation module 160 as described with reference to Figure 1. Correlation module 300 receives **feature maps** $F_1$ 140 and $F_2$ 150, which result from respectively applying neural network 130 to images $I_1$ and $I_2$, as has been previously described with reference to Figure 1.

In a first optional step feature map $F_1$ 140 may be sub-sampled 310. Sub-sampling 310 refers to a method for reducing the size of feature map $F_1$ 140 by replacing a plurality of entries of feature map 140 by only a single value. In particular, the grid of local image descriptors 142 of feature map 140 may be partitioned in non-overlapping rectangular atomic portions with a height of n entries (e.g. 2, 3, 4, 5, 6,...) and a width of m entries (e.g. 2, 3, 4, 5, 6,...). In some embodiments the rectangular portions are quadratic with $n = m$, in a specific embodiment $n = m = 4$. Each portion includes n $\times$ m local image descriptors each of which is described as a d-dimensional vector. Sub-sampling 310 replaces the n $\times$ m local image descriptors of each atomic portion by a single local image descriptor for the atomic portion. This is achieved by choosing a single value for each entry of the d-dimensional vector based on the n $\times$ m values of the respective entries in the original local image descriptors of an atomic portion. Any suitable method for choosing a single value from the n $\times$ m original values can be used. In an embodiment, the maximum value of the respective n $\times$ m original values is chosen for each entry of the resulting d-dimensional vector of the local image descriptor. In another embodiment the average value of the respective n $\times$ m original values is taken for each entry of the resulting d-dimensional vector of the local image descriptor. In an alternative embodiment, the vector values of a local image descriptor at a specific position within each portion are chosen to replace the respective n $\times$ m original values. Regardless of the specific method for choosing the single local image descriptor for each portion, sub-sampling feature map $F_1$ 140 generates a reduced feature map $F_1$', comprising a reduced grid of local image descriptors, the reduced grid of local image descriptors having dimensions $H_1$' $\times$ $W_1$', where $H_1' = H_1/n$ and $W_1' = W_1/m$ .

In a next step an initial 4D correlation volume $C^0$ 320 may be determined based on feature maps $F_1$ 140 and $F_2$ 150. In case feature map $F_1$ 140 has been sub-sampled to generate reduced feature map $F_1$', initial 4D correlation volume $C^0$ 320 may be determined based on reduced feature map $F_1$' and feature map $F_2$ 150. Each entry in $C^0$ may represent a correlation between a pixel 114 $p = (x_p, y_p)$ in pixel grid 112 of image 110 and a pixel 124 $q = (x_q, y_q)$ in pixel grid 122 of image 120. The correlation is denoted as $C_{p,q}$. In case feature map $F_1$ 140 has been sub-sampled to generate reduced feature map $F_1$', each value in initial 4D correlation volume $C^0$ 320 may represent a correlation between an atomic portion (or patch) of the pixel grid 112 of image 110 with center $p = (x_p, y_p)$ and a pixel $q = (x_q, y_q)$ in pixel grid 122 of image 120. This correlation is similarly denoted as $C_{p,q}$. For the sake of clarity in the following description below, reference will only be made to $p$ **as a pixel** 114 in pixel grid 112 of image 110. However, it is to be understood that, in case of feature map $F_1$ 140 having been sub-sampled to generate reduced feature map $F_1$', $p = (x_p, y_p)$ may refer to the center of an atomic portion (or patch) of the pixel grid 112 of image 110. Each pixel 114 (or portion) $p$ in pixel grid 112 corresponds to a local feature descriptor 144 $D(p)$ in the grid of local feature descriptors 142 of feature map $F_1$ 140 (or the respective reduced grid of local feature descriptors of reduced feature map $F_1$'). Similarly, each pixel 124 $q$ in pixel grid 122 corresponds to a local feature descriptor 154 $D(q)$ in the grid of local feature descriptors 152 of feature map $F_2$ 150. Initial correlation volume $C^0$ 320 comprises all possible pixel-pixel correlation values $C^0(p,q)$. The correlation value $C^0(p,q)$ is determined by calculating a similarity value based on $D(p)$ and $D(q)$.

$$C^0(\boldsymbol{p}, \boldsymbol{q}) = sim(D(\boldsymbol{p}), D(\boldsymbol{q})) \tag{1}$$

Each similarity value may be a real number representing a measure of similarity between the local image descriptors on $D(p)$ and $D(q)$. Any suitable method for calculating similarity values for a pair of local image descriptors may be used. In a specific embodiment each similarity value is determined as a cosine similarity between the local image descriptors of a pair of local image descriptors on $D(p)$ and $D(q)$ based on the scalar product between the respective d-dimensional vectors representing the local image descriptors. In an embodiment of the invention each value $C^0(p,q)$ is a number in the range between 0 and 1. Initial correlation volume $C^0$ 320 may have dimensions $H_1 \times W_1 \times H_2 \times W_2$. In the case where feature map $F_1$ 140 has been sub-sampled to generate reduced feature map $F_1'$, initial correlation volume $C^0$ 320 may have dimensions $H_1' \times W_1' \times H_2 \times W_2$.

Once initial correlation volume $C^0$ 320 has been determined, iterative pyramid construction 330 is applied to $C^0$ to generate high-level correlation volume $C^L$ 340. Iterative pyramid construction 330 includes 4D Aggregation step 334 for iteratively determining higher-level correlation volumes $C^\ell$ for $1 \leq \ell \leq L$. In a first iteration step, first-level correlation volume $C^1$ is determined. First-level correlation volume $C^1$ is comprised of correlation values $C^1(p, q)$, which represent correlations between first-level patches of pixel grid 112 and pixel grid 122. Generally, a patch is a rectangular portion of a pixel grid (e.g. pixel grid 112 or pixel grid 122). In order to facilitate a concise discussion of the invention, the following is described with patches of width and height 2 (denoted as patch size $2 \times 2$), including either $2 \times 2$ pixels of a pixel grid or $2 \times 2$ patches of the previous iteration step. However, the specific patch size is not to be construed as limiting to the present invention, and other patch sizes (e.g. $2 \times 3$, $3 \times 2$, $3 \times 3$, or $4 \times 4$) may be utilized in embodiments of the present invention. The center of a patch of pixel grid 112 is denoted as $\boldsymbol{p} = (x_p, y_p)$ and the center of a patch of pixel grid 122 is denoted as $\boldsymbol{q} = (x_q, y_q)$. For a consistent notation, 0-level patches are considered to be pixels of the respective pixel grids. With this notation, an $\ell$-level patch has $2 \times 2$ children patches of level $\ell - 1$ for $1 \leq \ell \leq L$. A vector from the center of an $\ell$-level patch to the $i^{\text{th}}$ ($\ell - 1$)-level child patch of the $\ell$-level patch is denoted $\boldsymbol{v}_i^{\ell-1}$, for $i = 0, ..., 3$. In a specific embodiment, the respective vectors are $\boldsymbol{v}_0^{\ell-1} = (2^{\ell-1}, 2^{\ell-1})$, $\boldsymbol{v}_1^{\ell-1} = (2^{\ell-1}, -2^{\ell-1})$, $\boldsymbol{v}_2^{\ell-1} = (-2^{\ell-1}, 2^{\ell-1})$, and $\boldsymbol{v}_3^{\ell-1} = (-2^{\ell-1}, -2^{\ell-1})$. The correlation between $\ell$-level patches is determined based on the pair-wise correlations between the ($\ell - 1$)-level patches of which the $\ell$-level patches are comprised. Specifically, $C^\ell(\boldsymbol{p},\boldsymbol{q})$ may be computed as the average correlation of its four ($\ell - 1$)-level child patches in $C^{\ell-1}$:

$$C^\ell(\boldsymbol{p}, \boldsymbol{q}) = \frac{1}{4}\left(C^{\ell-1}\left(\boldsymbol{p} + \boldsymbol{v}_0^{\ell-1}, \boldsymbol{q} + \boldsymbol{v}_0^{\ell-1}\right) + C^{\ell-1}\left(\boldsymbol{p} + \boldsymbol{v}_1^{\ell-1}, \boldsymbol{q} - \boldsymbol{v}_1^{\ell-1}\right) \right.$$
$$\left. + C^{\ell-1}\left(\boldsymbol{p} - \boldsymbol{v}_2^{\ell-1}, \boldsymbol{q} + \boldsymbol{v}_2^{\ell-1}\right) + C^{\ell-1}\left(\boldsymbol{p} + \boldsymbol{v}_3^{\ell-1}, \boldsymbol{q} + \boldsymbol{v}_3^{\ell-1}\right)\right) \tag{2}$$

Aggregation step 334 can be implemented using 4D convolutions with a fixed sparse kernel, where non-zero values encode the parent-children relations in the pyramid. So far, this formulation is able to handle rigid transformations, where all child patches strictly fit into the boundaries of the parent patch. Some embodiments include an extension of the aggregation procedure, which allows for a certain degree of local deformations. In these embodiments, small local deformations of child patches may be taken into account at each iteration level by an additional 2D max-pooling step 332 performed before 4D Aggregation step 334 in each iteration cycle. Technically, the 2D max-pooling is performed with a suitable kernel (e.g. of size $3 \times 3$) along both dimensions of pixel grid 122 of the second Image $I_2$ 120.

In an alternative embodiment, deformations may be taken into account by adapting aggregation step 334, such that the aggregation step aggregates the highest correlation of each of the child ($\ell - 1$)-level patches at position $\boldsymbol{p}_i^{\ell-1}$ (with $\boldsymbol{p}_0^{\ell-1} = \boldsymbol{p} + \boldsymbol{v}_0^{\ell-1}$, $\boldsymbol{p}_1^{\ell-1} = \boldsymbol{p} + \boldsymbol{v}_1^{\ell-1}$, $\boldsymbol{p}_2^{\ell-1} = \boldsymbol{p} - \boldsymbol{v}_2^{\ell-1}$, and $\boldsymbol{p}_3^{\ell-1} = \boldsymbol{p} + \boldsymbol{v}_3^{\ell-1}$) with ($\ell - 1$)-level patches at positions in a neighborhood centered at position $\boldsymbol{q}_i^{\ell-1}$ (with $\boldsymbol{q}_0^{\ell-1} = \boldsymbol{q} + \boldsymbol{v}_0^{\ell-1}$, $\boldsymbol{q}_1^{\ell-1} = \boldsymbol{q} + \boldsymbol{v}_1^{\ell-1}$, $\boldsymbol{q}_2^{\ell-1} = \boldsymbol{q} - \boldsymbol{v}_2^{\ell-1}$, and $\boldsymbol{q}_3^{\ell-1} = \boldsymbol{q} + \boldsymbol{v}_3^{\ell-1}$). These maximal correlations may then be chosen for determining the correlations in $C^\ell$:

$$C^\ell(\boldsymbol{p}, \boldsymbol{q}) = \frac{1}{4}\sum_{i=0}^3 \max_{\boldsymbol{q}' \in \Omega_i} C^{\ell-1}\left(\boldsymbol{p}_i^{\ell-1}, \boldsymbol{q}'\right) \tag{3}$$

**Here,** $\Omega_i$ **denotes** a small local neighborhood centered at $q_i^{\ell-1}$.

Alternatively, deformations may also be taken into account by averaging over correlations of the ($\ell$ - 1)-level patch at position $p_i^{\ell-1}$ with ($\ell$ - 1)-level patches at positions in the neighborhood $\Omega_i$ centered at position $q_i^{\ell-1}$:

$$C^\ell(p,q) = \frac{1}{4}\sum_{i=0}^{3}\frac{1}{|\Omega_i|}\sum_{q'\in\Omega_i} C^{\ell-1}\left(p_i^{\ell-1}, q'\right) \qquad (4)$$

**The number** of ($\ell$ - 1)-level patches in the neighborhood $\Omega_i$ of $q_i^{\ell-1}$ is denoted $|\Omega_i|$. In one embodiment, the width and the height of the neighborhood $\Omega_i$ is a predetermined fraction (e.g. $\frac{1}{4}, \frac{1}{2}, 1$) of the width and the height of the child ($\ell$ - 1)-level patches.

As a final step in each iteration, rectification step 336 can optionally be performed to strengthen consistent correlations and discard spurious ones. Rectification step 336 may be implemented as a power non-linearity $x \rightarrow \max(0, x^\gamma)$ applied at the end of each iteration step to the output correlation values of 4D aggregation step 334. The specific value of $\gamma$ can be adapted to the circumstances and is not to be construed as limiting for the present invention. In an embodiment, $\gamma = 1.5$.

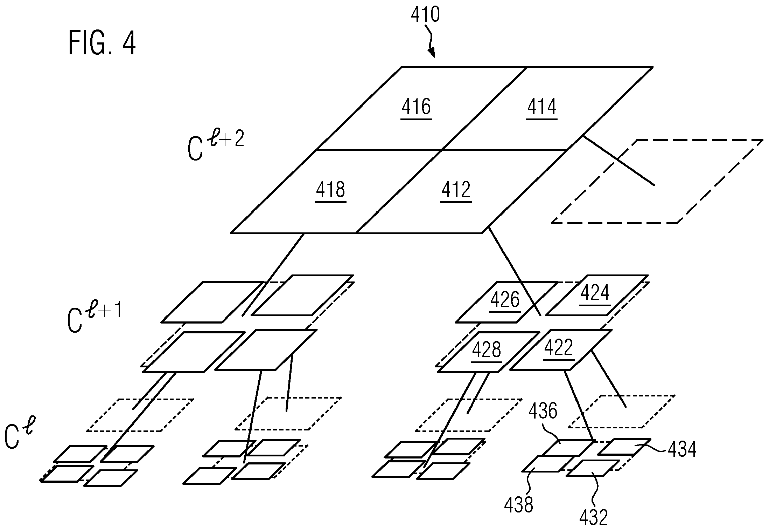

Mathematically, the receptive field of a parent patch doubles along $x$- and $y$-dimensions at each pyramid level, hence rapidly reaching the size of the full image, at which point the aggregation process naturally ends. Figure 4 illustrates the deformable pyramidal structure, which is enforced by iterative pyramid construction 330. The figure shows patches at three levels of iterative pyramid construction 330. At level $\ell + 2$, four neighboring ($\ell + 2$)-level patches 412, 414, 416 and 418 are shown. A correlation in the parent level correlation volume $C^{\ell+2}$ aggregates four correlations of the child level with a small tolerance for deformations, and so on for all levels. An ($\ell + 2$)-level correlation for ($\ell + 2$)-level patch 412 is aggregated from ($\ell + 1$)-level correlations for ($\ell + 1$)-level patches 422, 424, 426 and 428. Similarly, an ($\ell + 1$)-level correlation for ($\ell + 1$)-level patch 422 is aggregated from $\ell$-level correlations for $\ell$-level patches 432, 434, 436 and 438.

Returning to Figure 3, the output of the iterative pyramid construction applied to $C^0$ 320 is consolidated high-level correlation volume $C^L$ 340. The third and fourth dimensions of $C^L$ 340, which correspond to the dimensions of the pixel grid 122 of $I_2$ 120, are reduced by a factor $2^L$, where $L$ is the number of iterations (or pyramid levels) of iterative pyramid construction 330. The reduction factor may be different for other choices of the patch size in iterative pyramidal construction 330 and is not to be construed as limiting for the present invention. In embodiment $C^L$ 340 may have dimensions $H_1 \times W_1 \times H_2 \times W_2$. If optional sub-sampling step 310 is performed, $C^L$ 340 may have dimensions $H_1{}' \times W_1{}' \times H_2 \times W_2$.

The consolidated high-level correlation volume $C^L$ represents the correlations between large deformable high-level patches. Ideally, a high-level patch centered at pixel $p$ has a unique match in image $I_2$, i.e., there should exist only one $q$ such that $C^L(p, q)$ has a high value, while all other correlations for $q' \neq q$ will be close to 0. While this constraint is not realistic for pixel-level descriptors due to repetitive patterns, plain regions without structure, or severe appearance changes, it appears as a natural property for high-level patches in $C^L$ 340. In fact, the larger a patch is, the easier it is to resolve ambiguities and hard correspondences due to the larger context. Based on these considerations, uniqueness matching loss 350 is determined from $C^L$ 340 that encourages the property of a unique match for every high-level patch. Uniqueness matching loss 350 is the output value of correlation module 300 and represents an embodiment of loss 170 as illustrated in Figure 1. Since each high-level patch is dynamically built at test-time upon a deformable subset of pixel-level correlations, this loss is automatically back-propagated to optimal pixel correlations fitting iterative pyramid construction 330, and hence to pixel level local image descriptors.

The following presents an exemplary implementation of uniqueness matching loss 350. Other implementations are within the scope of the present invention as long as the resulting loss rewards the uniqueness of matches between high-level patches in $C^L$ such that a high-level patch in $I_1$ 110 has only one matching high-level patch in $I_2$ 120. For the sake of a clear description of the exemplary implementation of uniqueness matching loss 350, $C^L$ may be formally reshaped as a 2-dimensional tensor of size $(W_1 H_1) \times \left(\frac{W_2 H_2}{4^L}\right)$ (or in case sub-sampling step 310 is performed of size $(W_1{}'H_1{}') \times \left(\frac{W_2 H_2}{4^L}\right)$). The correlation volume $C^L$ 340 is normalized such that every row sums to 1:

$$\bar{C}^L(\boldsymbol{p}, \boldsymbol{q}) = \frac{C^L(\boldsymbol{p}, \boldsymbol{q})}{\sum_q C^L(\boldsymbol{p}, \boldsymbol{q}) + \varepsilon}, \tag{5}$$

where $\varepsilon$ serves as a regularization term that deals with occluded areas, for which all correlations would be close to zero. The value of $\varepsilon$ can be adapted to the circumstances and is not to be construed as limiting to the present invention. In an embodiment, the value of $\varepsilon$ is 0.03. The uniqueness loss is then expressed as:

$$\mathcal{L}_{\mathcal{U}}(F_1, F_2) = -\frac{1}{H_1 \times W_1} \|\bar{C}^L\|_2^2. \tag{6}$$

**The expression** $H_1 \times W_1$ in equation (5) is replaced by $H_1' \times W_1'$ in case optional sub-sampling step 310 is performed to generate reduced feature map $F_1'$. Given that $\bar{C}^L$ is $\ell_1$-normalized, the uniqueness loss concretely encourages all values in $\bar{C}^L$ to be close to 0 except one per row (i.e. one per high-level patch) that will be close to 1.

In an embodiment, the asymmetric loss $\mathcal{L}_{\mathcal{U}}(F_1, F_2)$ is averaged for each image pair in both directions: $\mathcal{L}'_{\mathcal{U}} = \mathcal{L}_{\mathcal{U}}(F_1, F_2) + \mathcal{L}_{\mathcal{U}}(F_2, F_1)$. The computational cost and memory footprint may be reduced in embodiments, by additionally sub-sampling feature maps $F_1$ and $F_2$ by a predetermined factor (e.g. by a factor 2) before passing them to correlation module 300. In a specific embodiment of the invention, the model is trained with batches of image pairs (e.g. 10 image pairs, 12 image pairs, 16 image pairs, or 24 image pairs). A portion of the image pairs of the batch (e.g. half of the image pairs, 2/3 of the image pairs, a quarter or three quarters of the image pairs) are trained with unsupervised loss 350 (e.g. $\mathcal{L}_{\mathcal{U}}(F_1, F_2)$ or $\mathcal{L}'_{\mathcal{U}}$). An averaged unsupervised loss $\overline{\mathcal{L}_{\mathcal{U}}}$ may be calculated over all image pairs of the portion of the batch of image pairs. The remaining portion of the batch of image pairs is generated synthetically via standard data augmentation of single images in a self-supervised manner. For these latter pairs, for which dense ground-truth correspondences are obtained from the augmentation, a pixel-wise ranking loss $\mathcal{L}_{\mathcal{P}}$ (e.g. average precision loss $\mathcal{L}_{AP}$ as in Revaud et al., "R2D2: repeatable and reliable detector and descriptor", NeurIPS, 2019 and US Patent 11176425 B2) is used, which is based on the extracted feature maps for each image in an image pair and the known ground-truth correspondences. An average loss $\overline{\mathcal{L}_{\mathcal{P}}}$ may be determined over all image pairs of the remaining portion of the batch of image pairs. The final loss $L$ may then be calculated as a weighted sum of the averaged losses. In an embodiment, $L$ is calculated as $\overline{\mathcal{L}_{AP}} + 0.3 \overline{\mathcal{L}'_{\mathcal{U}}}$. A suitable number of training iterations (e.g. 50000) have to be performed in order to achieve convergence for $f_\Theta$. In some embodiments, the fixed learning rate of $10^{-4}$ and a weight decay of $5 \cdot 10^{-4}$ is used for performing the training.

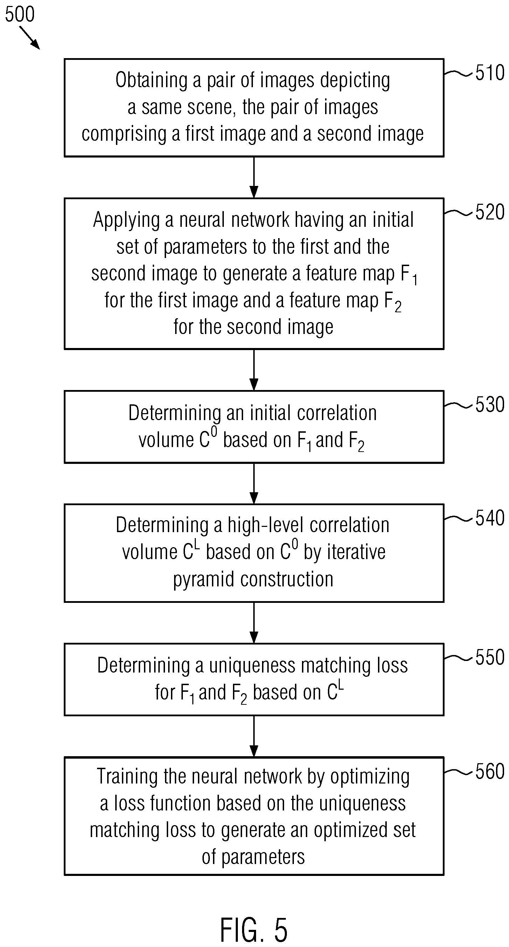

Figure 5 is a functional block diagram illustrating a computer-implemented method 500 of unsupervised neural network training for learning of local image descriptors, according to an embodiment. The method is implemented as a training phase for a neural network (e.g. neural network 130) as illustrated in Figures 1 and 3. The method starts at **step 510,** at which a pair of training images is obtained. Obtaining the training images encompasses that they can be received from any memory location (e.g. a local or remote computing system, a local or remote database, a cloud storage or any other memory location known in the field) on which they are stored. Alternatively, the images may be automatically retrieved from any of these memory locations. The images of the obtained image pair depict a same scene or visual content (e.g. a same object, a same person, a same architectural structure, and/or a same natural structure) such that both images include corresponding portions related to same features of the depicted scene. No dense or sparse ground-truth correspondences are known for the images of the image pair in advance of the training phase. The obtained image pair includes a first image (e.g. image 110) with a first pixel grid (e.g. pixel grid 112) and a second image (e.g. image 120) with a second pixel grid (e.g. pixel grid 122). The pixel grids differ in at least one aspect. The first pixel grid may have different horizontal and/or vertical dimensions different from those of the second pixel grid. Additionally or alternatively, the pixel values of at least a portion of the pixels in the first pixel grid may differ from pixel values of the respective pixels in the second pixel grid.

At **step 520** the neural network is applied to the first image to generate a feature map $F_1$ (e.g. feature map 140). Additionally, the neural network is applied to the second image to generate a feature map $F_2$ (e.g. feature map 150). The neural network has an initial set of internal, learnable parameters (e.g. parameters 132). Feature map $F_1$ comprises a first grid of local descriptors (e.g. grid of local descriptors 142), wherein each local descriptor (e.g. local descriptor 144) in the first grid of local descriptors corresponds to a pixel within the first pixel grid. Each local descriptor of the first grid of local descriptors is a computer-processable description of the local environment of the corresponding pixel in the first pixel grid. Feature map $F_2$ comprises a second grid of local descriptors (e.g. grid of local descriptors 152), wherein each local descriptor (e.g. local descriptor 154) in the second grid of local descriptors corresponds to a pixel within the second pixel grid. Each local descriptor of the second grid of local descriptors is a computer-processable description of the local environment of the corresponding pixel in the second pixel grid. A local image descriptor may be represented as a d-dimensional vector and is extracted from a pixel grid through the application of the neural network on the respective image.

At **step 530** an initial correlation volume $C^0$ (e.g. initial correlation volume 320) is determined based on $F_1$ and $F_2$. Initial correlation volume $C^0$ comprises local correlations of pixels of the first pixel grid with pixels of the second pixel grid. Each local correlation is determined for a pixel of the first pixel grid and a pixel of the second pixel grid based on a first corresponding local image descriptor in the and first grid of local image descriptors and a second corresponding local image descriptor in the second grid of local image descriptors. The first corresponding local image descriptor corresponds to the pixel in the first pixel grid and the second corresponding local image descriptor corresponds to the pixel in the second pixel grid. In an embodiment, the correlation $C^0(p,q)$ between a pixel $p$ of the first pixel grid and a pixel $q$ of the second pixel grid is determined as a similarity between local image descriptors $D(p)$ and $D(q)$. $D(p)$ corresponds to $p$ and is comprised in the first grid of local image descriptors. $D(q)$ corresponds to $q$ and is in comprised the second grid of local image descriptors. The similarity between local image descriptors $D(p)$ and $D(q)$ may be determined as a cosine similarity based on the scalar product of the d-dimensional vectors representing $D(p)$ and $D(q)$.

At **step 540,** a high-level correlation volume $C^L$ (e.g. high-level correlation volume 340) is determined based on $C^0$ by iterative pyramid construction (e.g. iterative pyramid construction 330). High-level correlation volume $C^L$ comprises aggregated high-level correlations between iteratively constructed high-level patches of the first and second pixel grids. Each high-level patch of the first pixel grid is a rectangular portion of the first pixel grid. Each high-level patch of the second pixel grid is a rectangular portion of the second pixel grid. $C^L$ may be iteratively constructed starting from $C^0$. A first iteration step may comprise aggregating local correlations of $C^0$ to first-level correlations between first-level patches of the first pixel grid and first-level patches of the second pixel grid, thereby generating a first-level correlation volume $C^1$. The first-level correlation between a first-level patch of the first pixel grid and a first-level patch of the second pixel grid may be determined as an averaged sum of local correlations between corresponding pixels in the first-level patch of the first pixel grid and the first-level patch of the second pixel grid. Each of the local correlations in the averaged sum of local correlations may have a maximum correlation value among a plurality of neighboring local correlation values.

A subsequent $(n + 1)^{th}$ iteration step for $1 \leq n < L,$ may comprise generating an $(n + 1)$-level correlation volume $C^{n+1}$ by aggregating n-level correlations of $C^n$ to $(n + 1)$-level correlations between $(n + 1)$-level patches of the first pixel grid and $(n + 1)$-level patches of the second pixel grid. The $(n + 1)$-level patches may be comprised of neighboring n-level patches of the respective pixel grid. The aggregated n-level correlations correspond to the neighboring n-level patches of the correlated $(n + 1)$-level patches. The $(n + 1)$-level correlation between an $(n + 1)$-level patch of the first pixel grid and an $(n + 1)$-level patch of the second pixel grid may be determined as an averaged sum of n-level correlations between corresponding n-level patches of the $(n + 1)$-level patch of the first pixel grid and the $(n + 1)$-level patch of the second pixel grid. Each of the n-level correlations in the averaged sum of n-level correlations may have a maximum correlation value among a plurality of neighboring n-level correlation values.

At **step 550,** a uniqueness matching loss (e.g. uniqueness matching loss 350) is determined for $F_1$ and $F_2$ based on $C^L$. The uniqueness matching loss provides a measure for a deviation of $F_1$ and $F_2$ from optimal feature maps. The uniqueness matching loss is configured to indicate a low deviation to optimal feature maps if, based on the high-level correlations in $C^L$, each high-level patch of the first pixel grid has a unique (i.e. only one) match among the high-level patches of the second pixel grid and each high-level patch of the second pixel grid has a unique (i.e. only one) match among the high-level patches of the first pixel grid. Accordingly, the uniqueness matching loss has low values if for each high-level patch of the first and the second pixel grids only one high-level correlation in $C^L$ corresponding to the respective patch has a high correlation value and all other high-level correlations in $C^L$ corresponding to the respective high-level patch have a low correlation value. A high correlation value may be close to 1, whereas a low correlation value may be close to 0.

At **step 560,** the neural network is trained by minimizing a loss function based on the uniqueness matching loss to generate an optimized set of parameters. Minimizing the loss function may include performing backpropagation based on the loss function to determine a new set of parameters which achieves a lower uniqueness matching loss in a subsequent training step. Training the network may further include repeating the steps of the method with the optimized set of parameters for a predetermined number of times or until the optimized set of parameters converges, thereby generating a trained neural network adapted for determining local image descriptors.

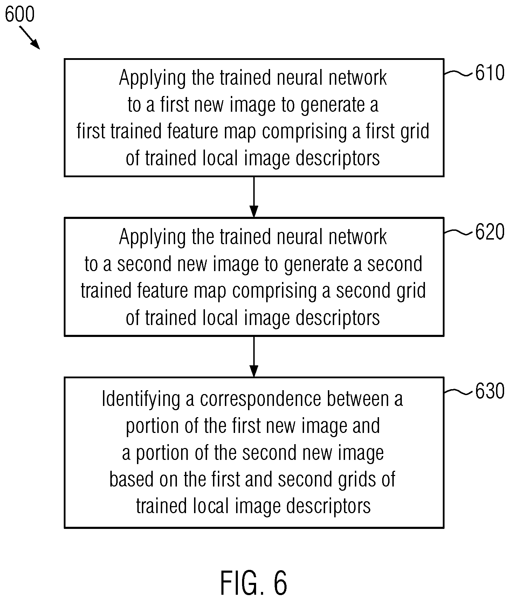

Figure 6 is a functional block diagram illustrating computer-implemented method 600 of determining corresponding portions in images with a trained neural network according to an embodiment, wherein the neural network has been trained according to the method illustrated in Figure 5. The method starts at **step 610** where the trained neural network is applied to first new image (e.g. image 210) to generate a first feature map (e.g. feature map 240) comprising a first grid of local image descriptors. At **step 620** the trained neural network is applied to a second new image (e.g. image 220) to generate a second feature map (e.g. feature map 250) comprising a second grid of local image descriptors. The first and second new images may depict a same scene using different pixel grids. At **step 630** a correspondence (e.g. one of correspondences 270) between a portion of the first new image and a portion of the second new image is identified based on the first and second grids of local image descriptors. The corresponding portions identified relate to a same part of the depicted scene. Additional correspondences between the images may be determined either between keypoints of the images or for each pixel in the images (i.e. dense correspondences). Step 630 may be performed by matching module 260 shown in Figure 2.

## Experiments

First details of an exemplary implementation of the presented training method as used for a set of experiments will be discussed. Then, different datasets and benchmarks used in the experiments will be introduced. Finally, the details of the experiments and comparisons to other technique will be presented.

As training data, 150,000 pairs are used from the SfM-120k dataset (Radenovic et al., "Revisiting Oxford and Paris: Large-scale image retrieval benchmarking", CVPR, 2018), which contains images from famous landmarks. These training pairs are obtained using the overlap of observations in a SfM model built with COLMAP and provided with the dataset. This process is done with SIFT, which requires no supervision, and only serves to verify whether two images depict the same scene, but does not guide the matching at all. Random crops of size $256 \times 256$ are performed on these pairs. To generate the synthetic pairs, images randomly sampled from this dataset and standard data augmentation techniques are applied. In particular, random pixel and color jittering, random rescaling, rotations and homographies are used.

In an exemplary implementation of network $f_\theta$, gradients with a $5 \times 5$ convolution with stride 1 and 128 output channels may first be extracted. Then $4 \times 4$ non-overlapping gradient patches are embedded into 512-dimensional features using a convolution of kernel $4 \times 4$ with stride 4. Subsequently, a series of pointwise and depthwise convolutions are applied. The exemplary implementations uses seven such blocks, with depthwise convolutions using $9 \times 9$ kernels. Finally, a last pointwise convolution and PixelShuffle operation is applied to obtain a feature map F with $d = 128$ dimensions.

## Datasets and Benchmarks

HPatches (Balnats et al., "A Benchmark and evaluation of handcrafted and learned local descriptors", CVPR, 2017) consists of 116 image sequences with varying photometric and viewpoint changes. Each sequence contains a reference image and five source images related by a homography to the source image taken under different viewpoint or illumination.

ETH3D (Schöps et al., "A multi-view stereo benchmark) contains indoor and outdoor sequences captured using a hand-held camera and registered with SfM. Image pairs are generated by sampling frames with a fixed interval. It is used to evaluate the robustness to viewpoint changes as the baseline widens for increasing intervals.

Aachen Day-Night v1.1 (Zhang et al., "Reference pose generation for long-term visual localization via learned features and view synthesis", IJCV, 2021) is a large-scale outdoor visual localization benchmark. The Day-Night split is specifically considered to measure the generalization performance of the embodiments of the present invention, as it features large viewpoint changes and severe illumination changes due to the day/night duality. For this task, the following method is used: in a first step, a global SfM map is built from the database images, and in a second step, query images are localized with regard to this mapping. The computational complexity of a complete matching is handled via the use of image retrieval with AP-GeMLM18 (Revaud et al., "Learning with average precision: Training image retrieval with a listwise loss, ICCV, 2019) global descriptors. The number of image pairs is reduced to the top-20 nearest neighbors, during both the mapping and the query phases. Finally, 20,000 local features for each of these retrieved images are extracted and matched to estimate first the global map and then the camera poses.

## Dense Matching

The performance of the PUMP descriptors (i.e. the local image descriptors extracted from an image by applying trained neural network 230 to the image), according to embodiments, is evaluated in a dense or quasi-dense manner using DeepMatching (Revaud et al., "DeepMatching: Hierarchical deformable dense matching", IJCV, 2016). In this exemplary implementation of matching module 260, the basic pixel descriptor of DeepMatching is replaced by the PUMP descriptors. The rest of the pipeline is left unchanged, except for the built-in cycle-consistency verification that has been enhanced to include nearest neighbors as well. It is noted that the output of DeepMatching is not dense but quasi-dense, as it outputs one correspondence per atomic patch from the first image. When dense warp fields are required, a densification technique is used following COTR's scheme (Jiang et al., "Cotr: Correspondence transformer for matching across images", ICCV, 2021) which includes linearly interpolate matches using a Delaunay triangulation.

For HPatches, evaluation is performed on all image pairs from image data set that features viewpoint changes. Table 1 represents both quasi-dense and fully-dense (i.e. interpolated) outputs. Two models according to embodiments of the present invention are evaluated: one trained solely from self-supervised pairs (S), i.e., obtained via data augmentation, and one including unsupervised pairs as well (S+U). Without interpolation, the self-supervised model (S) performs slightly better than the model trained with unsupervised pairs (S+U). This is not surprising given that it is trained exclusively from synthetic augmentations (homographies) fitting exactly the distribution of the test set. In fully-dense mode, the unsupervised model (S+U) outperforms the self-supervised model (S), indicating that the unsupervised loss allows for production of fewer outliers (as these strongly impair Delaunay interpolation) and is thus more robust. Overall, whether it be used with or without interpolation, both models outperform all state-of-the-art approaches by a large margin. Both models according to embodiments of the present invention also significantly outperform the recently proposed unsupervised WarpC matching loss (Truong et al.,"Warp consistency of unsupervised learning of dense correspondences", ICCV, 2021). Altogether, these results highlight the excellent capacity of our pyramidal matching prior according to embodiments of the present invention in the case of large planar areas without discontinuities.

| | Method | AEPE↓ | PCK@1↑ | PCK@3↑ | PCK@5↑ |
|---|---|---|---|---|---|
| Dense flow | LiteFlowNet | 118.85 | 13.91 | – | 31.64 |
| | PWC-Net | 96.14 | 13.14 | – | 37.14 |
| | DGC-Net | 33.26 | 12.00 | – | 58.06 |
| | RAFT | 44.3 | 31.22 | 62.48 | 70.85 |
| | GLU-Net | 25.05 | 39.55 | 71.52 | 78.54 |
| | GLU-Net+GOCor | 20.16 | 41.55 | – | 81.43 |
| | WarpC | 21.00 | – | – | 83.24 |
| | COTR + Interp. | 7.89 | 33.08 | 77.09 | 86.33 |
| | DMP | 5.21 | – | – | 90.89 |
| | PUMP (S)+DM + Interp. | <u>4.19</u> | <u>76.36</u> | <u>90.11</u> | <u>92.29</u> |
| | PUMP (S+U)+DM + Interp. | **3.76** | **77.05** | **90.86** | **93.02** |
| Sparse | COTR | 7.75 | 40.91 | 82.37 | 91.10 |
| | PUMP (S)+DM | **2.87** | **74.72** | **96.05** | <u>97.14</u> |
| | PUMP (S+U)+DM | <u>2.97</u> | <u>74.01</u> | <u>95.86</u> | **97.27** |

Table 1: Average End Point Error (AEPE) and Percent of Correct Keypoints (PCK) for different thresholds on the HPatches dataset. Sparse methods only return a subset of correspondences which they are confident of. The best and second best results are respectively in bold and underlined. DM stands for DeepMatching and 'Interp.' means Interpolation. The approach according to the present invention is evaluated only with self-supervised pairs (S) and with a combination of self-supervised and unsupervised training pairs (S+U).

Embodiments of the present invention are evaluated in a more challenging setting with real image pairs from ETH3D featuring viewpoint changes on complex 3D shapes and many discontinuities in the optical flow. Since the ground-truth is sparse and not necessarily aligned with the quasi-dense output, only results with the densely-interpolated variant for various frame intervals (e.g. rate) are presented in Table 2. It is observed that the model trained with unsupervised pairs significantly outperforms the self-supervised one by up to 25% (relative gain). This highlights the superior robustness against realistic noise of the model trained by injecting matching priors. Overall, it also outperforms all existing approaches, scoring the first or second Average End Point Error (AEPE) for all rate intervals. In addition, the models according to embodiments are significantly faster than other methods such as DPM (Hong and Kim, "Deep matching prior: Test-time optimization for dense correspondence", ICCV, 2021), which requires multiple minutes per testing pair for specific fine-tuning on each one.

Table 2: Average EndPoint Error (AEPE) for different rates on the ETH3D dataset. The best and second best results are respectively in bold and underlined.

| Method | AEPE↓ | | | | | | |
|---|---|---|---|---|---|---|---|
| | rate3 | rate5 | rate7 | rate9 | rate11 | rate13 | rate15 |
| LiteFlowNet | **1.66** | 2.58 | 6.05 | 12.95 | 29.67 | 52.41 | 74.96 |
| PWC-Net | 1.75 | 2.10 | 3.21 | 5.59 | 14.35 | 27.49 | 43.41 |
| DGC-Net | 2.49 | 3.28 | 4.18 | 5.35 | 6.78 | 9.02 | 12.23 |
| GLU-Net | 1.98 | 2.54 | 3.49 | 4.24 | 5.61 | 7.55 | 10.78 |

(continued)

| Method | AEPE↓ | | | | | | |
|---|---|---|---|---|---|---|---|
| | rate3 | rate5 | rate7 | rate9 | rate11 | rate13 | rate15 |
| RAFT | 1.92 | 2.12 | 2.33 | 2.58 | 3.90 | 8.63 | 13.74 |
| DMP | 1.78 | 2.07 | 2.52 | 3.07 | 4.72 | 6.14 | 7.47 |
| COTR + Interp. | 1.71 | 1.92 | 2.16 | 2.47 | 2.85 | **3.23** | 3.76 |
| PUMP (S)+DM + Interp. | 1.77 | 2.81 | 2.39 | 2.39 | 3.56 | 3.87 | 4.57 |
| PUMP (S+U)+DM + Interp. | 1.67 | **1.86** | **2.12** | **2.37** | **2.81** | 3.41 | **3.69** |

**Sparse Keypoint-Based Matching**

The impact of the matching priors leveraged during training in a sparse matching setting is evaluated by comparing again the performance achieved by the PUMP (S) and PUMP (S+U) models according to embodiments of the present invention. Since the method according to the invention produces dense descriptor maps, an external keypoint detector is needed to select repeatable locations in the image scale-space. To make the evaluation as comprehensive as possible, the performance for three standard detectors is measured: SIFT (Lowe, "Object recognition from local scale invariant features", ICCV, 1999), R2D2 (Revaud et al., "R2D2: repeatable and reliable detector and descriptor", NeurIPS, 2019) and SuperPoint (DeTone et al.: "Self-supervised interest point detection and description", CVPR Workshops, 2018). For each detector, the same number of keypoints are extracted at the same locations and scales for each method, making the evaluation fair and strictly centered on the descriptors.

A comprehensive study of the overall descriptor quality is performed by evaluating jointly on two complementary tasks, namely in terms of keypoint matching on HPatches and localization accuracy on Aachen-Night. For HPatches, the Mean Matching Accuracy (MMA) is measured by following the experimental protocol of Dusmanu et el., "D2-Net: A trainable CNN for joint description and detection of local features", CVPR, 2019. The MMA corresponds to the average percentage of correct matches for all image pairs with regard to a specified error threshold in pixels. Visual localization performance is measured as the percentage of queries successfully localized with regard to specified thresholds on the camera position and orientation. Table 3 presents results for each keypoint detector and each model on both benchmarks. The results show that the models according to embodiments of the present invention, including the self-supervised model (S), significantly outperform their respective keypoint baselines on HPatches. Interestingly, this does not translate into localization accuracy - in fact the self-supervised model constantly yields an inferior localization accuracy compared to baseline keypoints. This discrepancy is explained by the fact that self-supervision cover simple transformation like homographies well, but fail to model more realistic changes. In contrast, the model trained with unsupervised pairs (S+U) largely outperforms the self-supervised model by 6 points on average and all baseline keypoints as well, despite being trained without pixel-level supervision.

| Detector | Descriptor | HPatches | | | Localization on Aachen Day-Night | | |
|---|---|---|---|---|---|---|---|
| | | MMA@1↑ | MMA@3↑ | MMA@5↑ | 0.25m, 2° | 0.5m, 5° | 5m, 10° |
| SIFT | SIFT | 29.79 | 43.89 | 46.74 | 45.55 | 53.40 | 63.87 |
| | PUMP (S) | 33.81 | 55.35 | 63.26 | 67.02 | 76.96 | 90.58 |
| | **PUMP (S+U)** | **34.94** | **58.02** | **67.37** | **73.30** | **86.91** | **97.91** |
| | Abs. gain | ↑+1.1 | ↑+2.7 | ↑+4.1 | ↑+6.2 | ↑+10.0 | ↑+7.3 |
| R2D2 | R2D2 | 33.17 | 75.53 | 83.84 | 72.25 | 85.86 | 97.91 |
| | PUMP (S) | 37.46 | 83.38 | 91.46 | 69.63 | 84.82 | 96.86 |
| | **PUMP (S+U)** | **37.83** | **84.16** | **92.42** | **73.30** | **86.91** | **98.43** |
| | Abs. gain | ↑+0.4 | ↑+0.8 | ↑+1.0 | ↑+6.2 | ↑+2.1 | ↑+1.6 |
| SuperPoint | SuperPoint | 27.03 | 65.22 | 75.54 | 70.16 | 86.91 | 97.91 |
| | PUMP (S) | 32.48 | 71.44 | 78.81 | 67.54 | 81.68 | 93.19 |
| | **PUMP (S+U)** | **33.36** | **73.41** | **81.4** | **74.35** | **87.96** | **98.43** |
| | Abs. gain | ↑+0.9 | ↑+2.0 | ↑+2.6 | ↑+6.2 | ↑+6.3 | ↑+5.2 |

Table 3: Mean Matching Accuracy (MMA) on HPatches and percentage of localized queries on Aachen-Night within three error thresholds, with different sparse keypoint detectors. Absolute gain shows the performance increase when training with unsupervised pairs (S+U) compared to self-supervised pairs only (S).

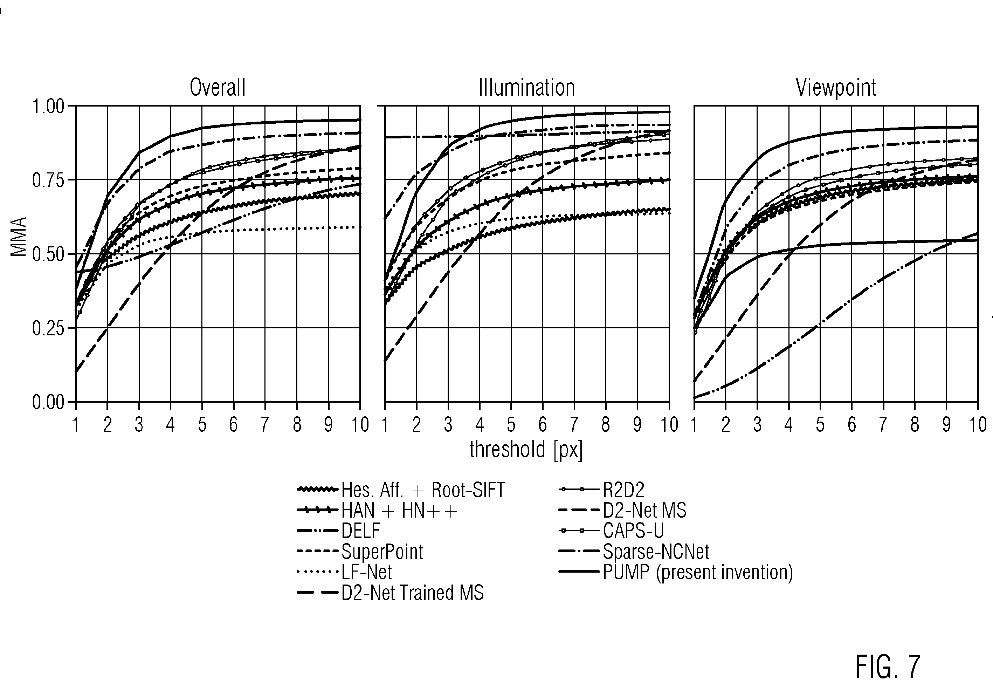

Figure 7 illustrates a comparison of the performance of models according to the present invention with the state of the art on HPatches (in this case R2D2's keypoint detector is used to extract the keypoints). The figure shows matching results on the HPatches dataset in terms of Mean Matching Accuracy (MMA) for various error thresholds. The models according to embodiments of the invention significantly outperform all state-of-the-art methods, including the recent Sparse NCNet (Rocco et al., "Neighbourhood consensus network", NeurIPS, 2018) and the self-supervised method CAPS-U (Melekhov et al., "Digging into self-supervised learning of feature descriptors", 3DV, 2021).

Although the above embodiments have been described within the context of method steps, they also represent a description of a corresponding component, module or feature of a corresponding apparatus or system.

Some or all of the method steps may be implemented by a computer in that they are executed by (or using) a processor, a microprocessor, an electronic circuit or processing circuitry.

The embodiments described above may be implemented in hardware or in software. The implementation can be performed using a non-transitory storage medium such as a computer-readable storage medium, for example a floppy disc, a DVD, a Blu-Ray, a CD, a ROM, a PROM, an EPROM, an EEPROM or a FLASH memory. Such computer-readable media can be any available media that can be accessed by a general-purpose or special-purpose computer system.

Generally, embodiments can be implemented as a computer program product with a program code or computer-executable instructions, the program code or computer-executable instructions being operative for performing one of the methods when the computer program product runs on a computer. The program code or the computer-executable instructions may, for example, be stored on a computer-readable storage medium.

In an embodiment, a storage medium (or a data carrier, or a computer-readable medium) comprises, stored thereon, the computer program or the computer-executable instructions for performing one of the methods described herein when it is performed by a processor. In a further embodiment, an apparatus comprises one or more processors and the storage medium mentioned above.

In a further embodiment, a system comprises means, for example processing circuitry such as a processor communicating with a memory, the means being configured to, or adapted to, perform one of the methods described herein.

A further embodiment comprises a computer having installed thereon the computer program or instructions for performing one of the methods described herein.

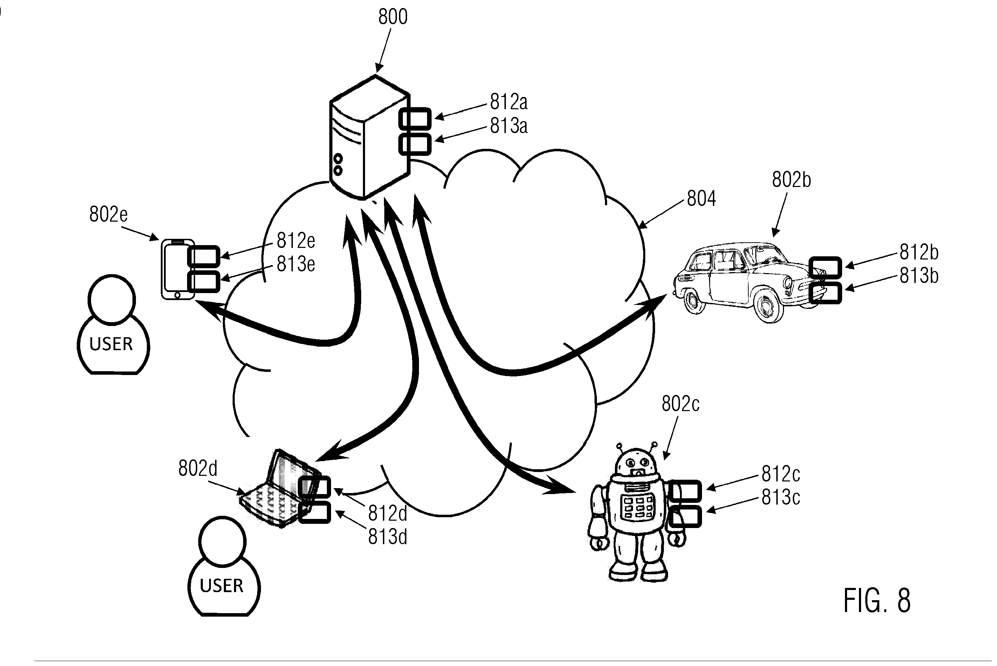

The above-mentioned methods and embodiments may be implemented within a system architecture such as illustrated in Figure 8, which comprises server 800 and one or more client devices 802 that communicate over a network 804 (which may be wireless and/or wired), such as the Internet, for data exchange. Server 800 and the client devices 802 include a data processor 812 and memory 813 such as a hard disk. The client devices 802 may be any device that communicates with server 800, including autonomous vehicle 802b, robot 802c, computer 802d, or cell phone 802e.

More precisely, in one embodiment, the method 500 for unsupervised neural network training for learning of local image descriptors is performed at server 800. The server may provide the trained neural network (e.g. trained neural network 230) to any of the devices, which may then perform method 600 based on the received trained neural network to compute optimal local image descriptors for determining whether a true match exists between image pairs. In various embodiments, the determination that a true match exists is used in different applications including, visual localization and mapping, pose estimation, Structure-from-Motion, 3D reconstruction, and image search that rely on such descriptors. In an exemplary embodiment, one of the devices 802 performs both methods 500 and 600. In a further embodiment, autonomous vehicle 802b (or robot 802c) comprises an optical sensor which obtains a first image of the surroundings of the vehicle (or the robot). In addition, the vehicle (or the robot) stores a second image (with location information) of the surroundings of the vehicle (or the robot) on memory device 813b/c. Vehicle 802b (or robot 802c) then performs method 600 with the first and second image to identify corresponding portions in the images to determine a position of the vehicle (or the robot) within the surroundings of the vehicle (or the robot) via visual localization.

**Claims**

1. A computer-implemented method of unsupervised neural network training for learning of local image descriptors, the method comprising:

   obtaining a first pair of images depicting a same scene, the pair of images including a first image with a first pixel grid and a second image with a second pixel grid, wherein the first pixel grid differs from the second pixel grid;
   applying a neural network having an initial set of parameters to the first image and the second image to generate a feature map $F_1$ for the first image and a feature map $F_2$ for the second image, $F_1$ comprising a first grid of local image descriptors and $F_2$ comprising a second grid of local image descriptors, wherein each local image descriptor in the first grid of local image descriptors corresponds to a respective pixel within the first pixel grid and each local image descriptor in the second grid of local image descriptors corresponds to a respective pixel within the second pixel grid;
   determining an initial correlation volume $C^0$ based on $F_1$ and $F_2$, wherein $C^0$ comprises local correlations of pixels of the first pixel grid with pixels of the second pixel grid, wherein each local correlation between a pixel of the first pixel grid and a pixel of the second pixel grid is determined based on the local image descriptors corresponding to the correlated pixels;
   determining a high-level correlation volume $C^L$ based on $C^0$ by iterative pyramid construction, wherein $C^L$ comprises aggregated high-level correlations between iteratively constructed high-level patches of the first and second pixel grids, each patch being a rectangular portion of the respective pixel grid;
   determining a uniqueness matching loss for $F_1$ and $F_2$ based on $C^L$, the uniqueness matching loss providing a measure for a deviation of $F_1$ and $F_2$ from optimal feature maps, wherein the deviation from optimal feature maps is low if, based on the high-level correlations in $C^L$, each high-level patch of the first and the second pixel grids has a unique match among the high-level patches of the respective other pixel grid; and
   training the neural network by minimizing a loss function based on the uniqueness matching loss to generate an optimized set of parameters, thereby generating a trained neural network adapted for determining optimal local image descriptors.

2. The method of claim 1, further comprising:

   applying the trained neural network to a first new image to generate a third feature map comprising a third grid of local image descriptors;
   applying the trained neural network to a second new image to generate a fourth feature map comprising a fourth grid of local image descriptors, wherein the first and second new images depict a same new scene using different pixel grids; and
   identifying a correspondence between a portion of the first new image and a portion of the second new image based on the third and fourth grids of local image descriptors, wherein the corresponding portions relate to a same part of the depicted new scene.

3. The method of claim 1 or 2, wherein obtaining the first pair of images comprises obtaining a batch of image pairs, wherein the batch of image pairs includes the first pair of images and a second pair of images, the second pair of images comprising a source image and an augmented image, the augmented image being generated synthetically from the source image via data augmentation, wherein ground-truth correspondences between the source image and the augmented image are obtained from the data augmentation, wherein the method further comprises:

applying the neural network with the initial set of parameters to the source image and the augmented image to generate respective feature maps for the source image and the augmented image, each feature map comprising a respective grid of local image descriptors; and

determining a pixel-wise ranking loss based on the grid of local image descriptors corresponding to the source image, the grid of local image descriptors corresponding to the augmented image, and the ground-truth correspondences between the source image and the augmented image,

wherein training the neural network comprises minimizing the loss function based on a weighted sum of the uniqueness matching loss and the pixel-wise ranking loss.

4. The method of any one of the preceding claims, wherein determining $C^L$ comprises:

aggregating local correlations of $C^0$ to first-level correlations between first-level patches of the first pixel grid and first-level patches of the second pixel grid, thereby generating a first-level correlation volume $C^1$; and

for $n$ between 1 and $L - 1$, iteratively aggregating n-level correlations of $C^n$ to $(n + 1)$-level correlations between $(n + 1)$-level patches of the first pixel grid and $(n + 1)$-level patches of the second pixel grid, thereby generating an $(n + 1)$-level correlation volume $C^{n+1}$, the $(n + 1)$-level patches being comprised of neighboring n-level patches of the respective pixel grid and the aggregated n-level correlations corresponding to the neighboring n-level patches of the correlated $(n + 1)$-level patches.

5. The method of claim 4, wherein aggregating local correlations of $C^0$ comprises determining a first-level correlation between a first-level patch of the first pixel grid and a first-level patch of the second pixel grid as an averaged sum of local correlations between corresponding pixels in the first-level patch of the first pixel grid and the first-level patch of the second pixel grid, and

wherein aggregating n-level correlations of $C^n$ comprises determining an $(n + 1)$-level correlation between an $(n + 1)$-level patch of the first pixel grid and an $(n + 1)$-level patch of the second pixel grid as an averaged sum of n-level correlations between corresponding n-level patches of the $(n + 1)$-level patch of the first pixel grid and the $(n + 1)$-level patch of the second pixel grid.

6. The method of claim 5, wherein each of the local correlations in the averaged sum of local correlations has a maximum correlation value among a plurality of neighboring local correlation values in $C^0$, and wherein each of the n-level correlations in the averaged sum of n-level correlations has a maximum correlation value among a plurality of neighboring n-level correlation values in $C^n$, or

wherein each of the local correlations in the averaged sum of local correlations is determined as an average correlation value of a plurality of neighboring local correlation values in $C^0$, and wherein each of the n-level correlations in the averaged sum of n-level correlations is determined as an average correlation value among a plurality of neighboring n-level correlation values in $C^n$.

7. The method of any one of claims 4 to 6, wherein each $(n + 1)$-level patch of the first or second pixel grid comprises $2 \times 2$ n-level patches of the respective pixel grid.

8. The method of any one of the preceding claims, wherein the initial correlation volume $C^0$ has a first dimension corresponding to a first dimension of $F_1$ and a second dimension corresponding to a second dimension of $F_1$, and wherein generating $C^0$ comprises subsampling of $F_1$ by a predetermined factor in the first and second dimensions to generate **a subsampled** feature map having a first reduced dimension $H_1'$ and a second reduced dimension $W_1'$.

9. The method of claim 8, wherein subsampling $F_1$ comprises:

dividing the first pixel grid in non-overlapping atomic patches, each atomic patch including a plurality of pixels; and

for each atomic patch, determining one resulting local descriptor based on the local image descriptors corresponding to the pixels of the respective patch, wherein the resulting local descriptor represents all pixels of the atomic patch in the subsampled feature map.

10. The method of claim 9, wherein determining $C^0$ comprises, for each atomic patch of the first pixel grid, determining correlations of the atomic patch with each pixel of the second pixel grid, each correlation being determined based on the local image descriptor representing the respective atomic patch in the subsampled feature map and the local image descriptor of $F_2$ corresponding to the correlated pixel of the second pixel grid.

11. The method of claim 9 or 10, wherein each atomic patch has a size of 4 by 4 pixels, and wherein the first dimension of $F_1$

is $4 \times H_1'$ and the second dimension of $F_1$ is $4 \times W_1'$.

12. The method of any one of claims 4 to 11, wherein $C^0$ is a 4-dimensional tensor and the third and fourth dimensions of $C^0$ correspond to the first and second dimensions of $F_2$, and wherein, for each $n$ between 0 and $L$ - 1, $C^{n+1}$ is a 4-dimensional tensor and generating $C^{n+1}$ comprises performing a 2-dimensional subsampling of $C^n$ such that the third and fourth dimensions of $C^{n+1}$ are each reduced by a predetermined factor compared to the third and fourth dimensions of $C^n$.

13. The method of any one of claims 4 to 12, wherein generating $C^n$, for each $n$ between 1 and $L$, comprises performing a rectification transformation for each n-level correlation of $C^n$.

14. The method of any one of claims 4 to 13, wherein the optimal image descriptors identify correspondences between portions of the first image and the second image depicting a scene with similar visual content but different viewpoints or different lighting conditions.

15. A computer-implemented method for identifying correspondences between a pair of input images, the method comprising:

receiving the input image pair including a first input image and a second input image;
processing the input image pair with a neural network trained by performing a method of unsupervised learning of local image descriptors according to one of claims 1 to 14, the trained neural network generating local image descriptors for the input image pair;
extracting correspondences between portions of the input image pair based on the image descriptors, each extracted correspondence mapping a portion of the first input image to a portion of the second input image;
determining with the extracted correspondences whether a true match exists between the input image pair, a true match existing between the input image pair when corresponding portions of the image pair depict a same scene; and
outputting whether a true match exists between the image pair.

16. A system comprising:

a processing unit; and
a memory connected to the processing unit, wherein the memory comprises computer-executable instructions that, when executed by the processing unit, cause the processing unit to perform a method according to one of claims 1 to 15.

17. One or more computer-readable media having computer-readable instructions stored thereon which, when executed by a processing unit, cause the processing unit to perform a method according to one of claims 1 to 15.

**Patentansprüche**

1. Computerimplementiertes Verfahren des nicht überwachten Trainings eines neuronalen Netzwerks zum Lernen von lokalen Bilddeskriptoren, wobei das Verfahren Folgendes umfasst:

Erhalten eines Bilderpaares, dessen Bilder die dieselbe Szene darstellen, wobei das Bilderpaar ein erstes Bild mit einem ersten Pixelraster und ein zweites Bild mit einem zweiten Pixelraster umfasst, wobei sich das erste Pixelraster von dem zweiten Pixelraster unterscheidet;
Anwendung eines neuronalen Netzwerks mit einem anfänglichen Satz von Parametern auf das erste Bild und das zweite Bild, um eine Feature-Map $F_1$ für das erste Bild und eine Feature-Map $F_2$ für das zweite Bild zu erzeugen, wobei $F_1$ ein erstes Raster von lokalen Bilddeskriptoren und $F_2$ ein zweites Raster von lokalen Bilddeskriptoren umfasst, wobei jeder lokale Bilddeskriptor in dem ersten Raster von lokalen Bilddeskriptoren einem jeweiligen Pixel innerhalb des ersten Pixelrasters entspricht und jeder lokale Bilddeskriptor in dem zweiten Raster von lokalen Bilddeskriptoren einem jeweiligen Pixel innerhalb des zweiten Pixelrasters entspricht;
Bestimmung eines anfänglichen Korrelationsvolumens $C^0$ basierend auf $F_1$ und $F_2$, wobei $C^0$ lokale Korrelationen von Pixeln des ersten Pixelrasters mit Pixeln des zweiten Pixelrasters umfasst, wobei jede lokale Korrelation zwischen einem Pixel des ersten Pixelrasters und einem Pixel des zweiten Pixelrasters basierend auf den lokalen Bilddeskriptoren bestimmt wird, die den korrelierten Pixeln entsprechen;

Bestimmung eines Korrelationsvolumens höherer Stufe $C^L$ basierend auf $C^0$ durch iterative Pyramidenkonstruktion, wobei $C^L$ aggregierte Korrelationen höherer Stufe zwischen iterativ konstruierten Patches höherer Stufe des ersten und zweiten Pixelrasters umfasst, wobei jeder Patch ein rechteckiger Teil des jeweiligen Pixelrasters ist;

Bestimmen eines Uniqueness-Matching-Loss für $F_1$ und $F_2$ basierend auf $C^L$, wobei der Uniqueness-Matching-Loss ein Maß für eine Abweichung von $F_1$ und $F_2$ von optimalen Feature-Maps bereitstellt, wobei die Abweichung von optimalen Feature-Maps gering ist, wenn basierend auf den Korrelationen höherer Stufe in $C^L$ jeder Patch höherer Stufe des ersten und des zweiten Pixelrasters eine eindeutige Übereinstimmung unter den Patches höherer Stufe des jeweils anderen Pixelrasters aufweist; und

Trainieren des neuronalen Netzwerks durch Minimieren einer Loss-Funktion basierend auf dem Uniqueness-Matching-Loss, um einen optimierten Parametersatz zu erzeugen, wodurch ein trainiertes neuronales Netzwerk erzeugt wird, das für die Bestimmung optimaler lokaler Bilddeskriptoren angepasst ist.

2. Verfahren nach Anspruch 1, das ferner Folgendes umfasst:

Anwenden des trainierten neuronalen Netzwerks auf ein erstes neues Bild, um eine dritte Feature-Map zu erzeugen, die ein drittes Raster lokaler Bilddeskriptoren umfasst;
Anwenden des trainierten neuronalen Netzwerks auf ein zweites neues Bild, um eine vierte Feature-Map zu erzeugen, die ein viertes Raster lokaler Bilddeskriptoren umfasst, wobei das erste und das zweite neue Bild dieselbe neue Szene unter Verwendung unterschiedlicher Pixelraster darstellen; und
Identifizieren einer Übereinstimmung zwischen einem Teil des ersten neuen Bildes und einem Teil des zweiten neuen Bildes basierend auf dem dritten und vierten Raster lokaler Bilddeskriptoren, wobei die entsprechenden Teile sich auf denselben Teil der abgebildeten neuen Szene beziehen.

3. Verfahren nach Anspruch 1 oder 2, wobei das Erhalten des ersten Bilderpaares das Erhalten einer Charge von Bilderpaaren umfasst, wobei die Charge von Bilderpaaren das erste Bilderpaar und ein zweites Bilderpaar umfasst, wobei das zweite Bilderpaar ein Quellbild und ein angereichertes Bild umfasst, wobei das angereicherte Bild synthetisch aus dem Quellbild über Datenanreicherung erzeugt wird, wobei Grundwahrheit-Korrespondenzen zwischen dem Quellbild und dem angereicherten Bild aus der Datenanreicherung erhalten werden,
wobei das Verfahren ferner Folgendes umfasst:

Anwendung des neuronalen Netzwerks mit dem anfänglichen Parametersatz auf das Quellbild und das angereicherte Bild, um entsprechende Feature-Maps für das Quellbild und das angereicherte Bild zu erzeugen, wobei jede Feature-Map ein entsprechendes Raster lokaler Bilddeskriptoren umfasst; und
Bestimmen eines pixelweisen Ranking-Loss basierend auf dem Raster lokaler Bilddeskriptoren, die dem Quellbild entsprechen, dem Raster lokaler Bilddeskriptoren, die dem angereicherten Bild entsprechen, und den Grundwahrheit-Korrespondenzen zwischen dem Quellbild und dem angereicherten Bild,
**wobei das** Trainieren des neuronalen Netzwerks das Minimieren der Loss-Funktion basierend auf einer gewichteten Summe des Uniqueness-Matching-Loss und des pixelweisen Ranking-Loss umfasst.

4. Verfahren nach einem der vorstehenden Ansprüche, wobei die Bestimmung von $C^L$ Folgendes umfasst:

Aggregieren lokaler Korrelationen von $C^0$ zu Korrelationen erster Stufe zwischen Patches erster Stufe des ersten Pixelrasters und Patches erster Stufe des zweiten Pixelrasters, wodurch ein Korrelationsvolumen erster Stufe $C^1$ erzeugt wird; und
für $n$ zwischen 1 und $L - 1$, iteratives Aggregieren von Korrelationen n-ter Stufe von $C^n$ zu Korrelationen $(n + 1)$-ter Stufe zwischen Patches $(n + 1)$-ter Stufe des ersten Pixelrasters und Patches (n + 1)-ter Stufe des zweiten Pixelrasters, wodurch ein Korrelationsvolumen $(n + 1)$-ter Stufe $C^{n+1}$ erzeugt wird, wobei die Patches $(n + 1)$-ter Stufe aus benachbarten Patches n-ter Stufe des jeweiligen Pixelrasters bestehen und die aggregierten Korrelationen n-ter Stufe den benachbarten Patches n-ter Stufe der korrelierten Patches (n + 1)-ter Stufe entsprechen.

5. Verfahren nach Anspruch 4, wobei das Aggregieren lokaler Korrelationen von $C^0$ das Bestimmen einer Korrelation erster Stufe zwischen einem Patch erster Stufe des ersten Pixelrasters und einem Patch erster Stufe des zweiten Pixelrasters als eine gemittelte Summe lokaler Korrelationen zwischen entsprechenden Pixeln in dem Patch erster Stufe des ersten Pixelrasters und dem Patch erster Stufe des zweiten Pixelrasters umfasst, und
wobei das Aggregieren von Korrelationen n-ter Stufe von $C^n$ das Bestimmen einer Korrelation $(n + 1)$-ter Stufe zwischen einem Patch $(n + 1)$-ter Stufe des ersten Pixelrasters und einem Patch (n + 1)-ter Stufe des zweiten als eine gemittelte Summe von Korrelationen n-ter Stufe zwischen entsprechenden Patches n-ter Stufe des Patches (n + 1)-ter Stufe des ersten Pixelrasters und des Patches (n + 1)-ter Stufe des zweiten Pixelrasters umfasst.

6. Verfahren nach Anspruch 5, wobei jede der lokalen Korrelationen in der gemittelten Summe der lokalen Korrelationen einen maximalen Korrelationswert unter einer Vielzahl benachbarter lokaler Korrelationswerte in $C^0$ aufweist, und wobei jede der Korrelationen n-ter Stufe in der gemittelten Summe der Korrelationen n-ter Stufe einen maximalen Korrelationswert unter einer Vielzahl benachbarter Korrelationswerte n-ter Stufe in $C^n$ aufweist, oder
**wobei jede** der lokalen Korrelationen in der gemittelten Summe der lokalen Korrelationen als ein durchschnittlicher Korrelationswert einer Vielzahl benachbarter lokaler Korrelationswerte in $C^0$ bestimmt wird, und wobei jede der Korrelationen n-ter Stufe in der gemittelten Summe der Korrelationen n-ter Stufe als ein durchschnittlicher Korrelationswert unter einer Vielzahl benachbarter Korrelationswerte n-ter Stufe in $C^n$ bestimmt wird.

7. Verfahren nach einem der Ansprüche 4 bis 6, wobei jeder Patch (n + 1)-ter Stufe des ersten oder zweiten Pixelrasters $2 \times 2$ Patches n-ter Stufe des jeweiligen Pixelrasters umfasst.

8. Verfahren nach einem der vorhergehenden Ansprüche, wobei das anfängliche Korrelationsvolumen $C^0$ eine erste Dimension aufweist, die einer ersten Dimension von $F_1$ entspricht, und eine zweite Dimension, die einer zweiten Dimension von $F_1$ entspricht, und wobei das Erzeugen von $C^0$ ein Unterabtasten von $F_1$ um einen vorbestimmten Faktor in der ersten und zweiten Dimension umfasst, um eine unterabgetastete Feature-Map mit einer ersten reduzierten Dimension $H1'$ und einer zweiten reduzierten Dimension $W1'$ zu erzeugen.

9. Verfahren nach Anspruch 8, wobei das Unterabtasten von $F_1$ Folgendes umfasst:

Aufteilen des ersten Pixelrasters in nicht überlappende atomare Patches, wobei jeder atomare Patch eine Vielzahl von Pixeln enthält; und
für jeden atomaren Patch, Bestimmen eines resultierenden lokalen Deskriptors basierend auf den lokalen Bilddeskriptoren, die den Pixeln des jeweiligen Patches entsprechen, wobei der resultierende lokale Deskriptor alle Pixel des atomaren Patches in der unterabgetasteten Feature-Map repräsentiert.

10. Verfahren nach Anspruch 9, wobei die Bestimmung von $C^0$ für jeden atomaren Patch des ersten Pixelrasters die Bestimmung von Korrelationen des atomaren Patches mit jedem Pixel des zweiten Pixelrasters umfasst, wobei jede Korrelation basierend auf dem lokalen Bilddeskriptor, der den jeweiligen atomaren Patch in der unterabgetasteten Feature-Map repräsentiert, und dem lokalen Bilddeskriptor von $F_2$ bestimmt wird, der dem korrelierten Pixel des zweiten Pixelrasters entspricht.

11. Verfahren nach Anspruch 9 oder 10, wobei jeder atomare Patch eine Größe von $4 \times 4$ Pixeln hat und wobei die erste Dimension von $F_1$ $4 \times H1'$ und die zweite Dimension von $F_1$ $4 \times W1'$ ist.

12. Verfahren nach einem der Ansprüche 4 bis 11, wobei $C^0$ ein 4-dimensionaler Tensor ist und die dritte und vierte Dimension von $C^0$ der ersten und zweiten Dimension von $F_2$ entsprechen, und wobei $C^{n+1}$ für jedes $n$ zwischen 0 *und* $L$ - 1 ein 4-dimensionaler Tensor ist und das Erzeugen von $C^{n+1}$ das Durchführen einer 2-dimensionalen Unterabtastung von $C^n$ umfasst, so dass die dritte und vierte Dimension von $C^{n+1}$ jeweils um einen vorbestimmten Faktor im Vergleich zu der dritten und vierten Dimension von $C^n$ reduziert sind.

13. Verfahren nach einem der Ansprüche 4 bis 12, wobei das Erzeugen von $C^n$ für jedes n zwischen 1 und $L$ das Durchführen einer Rektifikationstransformation für jede Korrelation n-ter Stufe von $C^n$ umfasst.

14. Verfahren nach einem der Ansprüche 4 bis 13, wobei die optimalen Bilddeskriptoren Entsprechungen zwischen Teilen des ersten Bildes und des zweiten Bildes identifizieren, die eine Szene mit ähnlichem visuellen Inhalt, aber unterschiedlichen Blickwinkeln oder unterschiedlichen Lichtverhältnissen darstellen.

15. Computerimplementiertes Verfahren zur Identifizierung von Übereinstimmungen zwischen zwei Eingabebildern, wobei das Verfahren Folgendes umfasst:

Empfang des Eingabebilderpaars, das ein erstes Eingabebild und ein zweites Eingabebild umfasst;
Verarbeitung des Eingabebilderpaares mit einem neuronalen Netzwerk, das durch Ausführen eines Verfahrens des nicht überwachten Lernens von lokalen Bilddeskriptoren gemäß einem der Ansprüche 1 bis 14 trainiert wurde, wobei das trainierte neuronale Netzwerk lokale Bilddeskriptoren für das Eingabebilderpaar erzeugt;

Extrahieren von Entsprechungen zwischen Teilen des Eingabebilderpaares basierend auf den Bilddeskriptoren, wobei jede extrahierte Entsprechung einen Teil des ersten Eingabebildes einem Teil des zweiten Eingabebildes zuordnet;

Bestimmen anhand der extrahierten Entsprechungen, ob eine echte Übereinstimmung zwischen dem Eingabebilderpaar besteht, wobei eine echte Übereinstimmung zwischen dem Eingabebilderpaar besteht, wenn entsprechende Teile des Bilderpaars dieselbe Szene darstellen; und

Ausgeben, ob eine echte Übereinstimmung zwischen dem Bilderpaar besteht.

**16.** System bestehend aus:

einer Prozessoreinheit und

einem mit der Prozessoreinheit verbundenen Speicher, wobei der Speicher computerausführbare Anweisungen umfasst, die, wenn sie von der Prozessoreinheit ausgeführt werden, die Prozessoreinheit veranlassen, ein Verfahren gemäß einem der Ansprüche 1 bis 15 auszuführen.

**17.** Ein oder mehrere computerlesbare Medien mit darauf gespeicherten computerlesbaren Anweisungen, die, wenn sie von einer Prozessoreinheit ausgeführt werden, die Prozessoreinheit veranlassen, ein Verfahren gemäß einem der Ansprüche 1 bis 15 auszuführen.

**Revendications**

**1.** Procédé mis en œuvre sur un ordinateur d'entraînement d'un réseau neuronal non supervisé pour un apprentissage de descripteurs locaux d'image, le procédé comprenant :

une obtention d'une première paire d'images décrivant une même scène, la paire d'images incluant une première image avec une première grille de pixels et une deuxième image avec une deuxième grille de pixels, dans lequel la première grille de pixels diffère de la deuxième grille de pixels ;

une application d'un réseau neuronal présentant un ensemble initial de paramètres pour la première image et la deuxième image pour générer une carte de caractéristiques $F_1$ pour la première image et une carte de caractéristiques $F_2$ pour la deuxième image, $F_1$ comprenant une première grille de descripteurs locaux d'image et $F_2$ comprenant une deuxième grille de descripteurs locaux d'image, dans lequel chaque descripteur local d'image dans la première grille de descripteurs locaux d'image correspond à un pixel respectif au sein de la première grille de pixels et dans lequel chaque descripteur local d'image dans la deuxième grille de descripteurs locaux d'image correspond à un pixel respectif au sein de la deuxième grille de pixels ;

une détermination d'un volume de corrélation initiale $C^0$ selon $F_1$ et $F_2$, dans lequel $C^0$ comprend des corrélations locales de pixels de la première grille de pixels avec des pixels de la deuxième grille de pixels, dans lequel chaque corrélation locale entre un pixel de la première grille de pixels et un pixel de la deuxième grille de pixels est déterminée selon les descripteurs locaux d'image correspondant aux pixels corrélés ;

une détermination d'un volume de corrélation de haut niveau $C^L$ selon $C^0$ par une construction pyramidale itérative, dans lequel $C^L$ comprend des corrélations de haut niveau agrégées entre des pièces de haut niveau construites de manière itérative des première et deuxième grilles de pixels, chaque pièce consistant en une partie rectangulaire de la grille de pixels respective ;

une détermination d'une perte correspondant à une unicité pour $F_1$ et $F_2$ selon $C^L$, la perte correspondant à une unicité fournissant une mesure pour une dérive de $F_1$ et $F_2$ depuis des cartes de caractéristiques optimales, dans lequel la dérive depuis des cartes de caractéristiques optimales est faible si, selon les corrélations de haut niveau dans $C^L$, chaque pièce de haut niveau des première et deuxième grilles de pixels présente une correspondance unique parmi les pièces de haut niveau de l'autre grille de pixels respective ; et

un entraînement du réseau neuronal en minimisant une fonction de perte selon la perte correspondant à une unicité pour générer un ensemble optimisé de paramètres, générant ainsi un réseau neuronal entraîné adapté pour déterminer des descripteurs locaux d'image optimaux.

**2.** Le procédé de la revendication 1, comprenant en outre :

une application du réseau neuronal entraîné à une première nouvelle image pour générer une troisième carte de caractéristiques comprenant une troisième grille de descripteurs locaux d'image ;

une application du réseau neuronal entraîné à une deuxième nouvelle image pour générer une quatrième carte de caractéristiques comprenant une quatrième grille de descripteurs locaux d'image, dans lequel les première et deuxième nouvelles images décrivent une même nouvelle scène en utilisant des grilles de pixels différentes ; et une identification d'une correspondance entre une partie de la première nouvelle image et une partie de la deuxième nouvelle image selon les troisième et quatrième grilles de descripteurs locaux d'image, dans lequel les parties correspondantes sont associées à une même partie de la nouvelle scène décrite.

3. Le procédé de la revendication 1 ou 2, dans lequel une obtention de la première paire d'images comprend un lot de paires d'images, dans lequel le lot de paires d'images inclut la première paire d'images et une deuxième paire d'images, la deuxième paire d'images comprenant une image source et une image augmentée, l'image augmentée étant générée de manière synthétique à partir de l'image source via une augmentation de données, dans lequel des correspondances vérifiées en pratique entre l'image source et l'image augmentée sont obtenues à partir de l'augmentation de données,

dans lequel le procédé comprend en outre :

une application du réseau neuronal avec le jeu initial de paramètres à l'image source et l'image augmentée pour générer des cartes de caractéristiques respectives pour l'image source et l'image augmentée, chaque carte de caractéristique comprenant une grille respective de descripteurs locaux d'image ; et
une détermination d'une perte par classement par pixels selon la grille de descripteurs locaux d'image correspondant à l'image source, la grille de descripteurs locaux d'image correspondant à l'image augmentée et les correspondances vérifiées en pratique entre l'image source et l'image augmentée,
dans lequel un entraînement du réseau neuronal comprend une minimisation de la fonction de perte selon une somme pondérée de la perte correspondant à une unicité et la perte par classement par pixels.

4. Le procédé de l'une quelconque des revendications précédentes, dans lequel une détermination de $C^L$ comprend :

une agrégation de corrélations locales de $C^0$ à des corrélations de premier niveau entre des pièces de premier niveau de la première grille de pixels et des pièces de premier niveau de la deuxième grille de pixels, générant ainsi un volume de corrélation de premier niveau $C^1$ ; et
pour n entre 1 et $L$ - 1, une agrégation itérative de corrélations de niveau n de $C^n$ à des corrélations de niveau (n + 1) entre des pièces de niveau (n + 1) de la première grille de pixels et des pièces de niveau (n + 1) de la deuxième grille de pixels, générant ainsi un volume de corrélation de niveau (n + 1) $C^{n+1}$, les pièces de niveau (n + 1) étant constituées de pièces de niveau n voisines de la grille de pixels respective et les corrélations de niveau n agrégées correspondant aux pièces de niveau n voisines des pièces de niveau (n + 1) corrélées.

5. Le procédé de la revendication 4, dans lequel une agrégation de corrélations locales de $C^0$ comprend une détermination d'une corrélation de premier niveau entre une pièce de premier niveau de la première grille de pixels et une pièce de premier niveau de la deuxième grille de pixels en tant que somme moyennée de corrélations locales entre des pixels correspondant dans la pièce de premier niveau de la première grille de pixels et la pièce de premier niveau de la deuxième grille de pixels, et
dans lequel une agrégation de corrélations de niveau n de $C^n$ comprend une détermination d'une corrélation de niveau (n + 1) entre une pièce de niveau (n + 1) de la première grille de pixels et une pièce de niveau (n + 1) de la deuxième grille de pixels en tant que somme moyennée de corrélations de niveau n entre des pièces de niveau n correspondantes de la pièce de niveau (n+1) de la première grille de pixels et la pièce de niveau (n+1) de la deuxième grille de pixels.

6. Le procédé de la revendication 5, dans lequel chacune des corrélations locales dans la somme moyennée de corrélations locales présente une valeur de corrélation maximale parmi une pluralité de valeurs de corrélation locales voisines dans $C^0$, et dans lequel chacune des corrélations de niveau n dans la somme moyennée de corrélations de niveau n présente une valeur de corrélation maximale parmi une pluralité de valeurs de corrélation de niveau n voisines dans $C^n$, et
dans lequel chacune des corrélations locales dans la somme moyennée de corrélations locales est déterminée comme une valeur de corrélation moyenne d'une pluralité de valeurs de corrélation locales voisines dans $C^0$, et dans lequel chacune des corrélations de niveau n dans la somme moyennée de corrélations de niveau n est déterminée comme une valeur de corrélation moyenne parmi une pluralité de valeurs de corrélation de niveau n voisines dans $C^n$.

7. Le procédé de l'une quelconque des revendications 4 à 6, dans lequel chaque pièce de niveau (n + 1) de la première ou la deuxième grille de pixels comprend 2 x 2 pièces de niveau n de la grille de pixels respective.

8. Le procédé de l'une quelconque des revendications précédentes, dans lequel le volume de corrélation initial $C^0$

présente une première dimension correspondant à une première dimension de $F_1$ et une deuxième dimension correspondant à une deuxième dimension de $F_1$, et dans lequel une génération de $C^0$ comprend un sous-échantillonnage de $F_1$ par un facteur prédéterminé dans les première et deuxième dimensions pour générer une carte de caractéristiques sous-échantillonnée présentant une première dimension réduite $H_1'$ et une deuxième dimension réduite $W_1'$.

9. Le procédé de la revendication 8, dans lequel un sous-échantillonnage de $F_1$ comprend :

une division de la première grille de pixels en des pièces atomiques non chevauchantes, chaque pièce atomique incluant une pluralité de pixels ; et
pour chaque pièce atomique, une détermination d'un descripteur local résultant selon les descripteurs locaux d'image correspondant aux pixels de la pièce respective, dans lequel le descripteur local résultant représente tous les pixels de la pièce atomique dans la carte de caractéristiques sous-échantillonnée.

10. Le procédé de la revendication 9, dans lequel une détermination de $C^0$ comprises, pour chaque pièce atomique de la première grille de pixels, une détermination de corrélations de la pièce atomique avec chaque pixel de la deuxième grille de pixels, chaque corrélation étant déterminée selon le descripteur local d'image représentant la pièce atomique respective dans la carte de caractéristiques sous-échantillonnée et le descripteur local d'image de $F_2$ correspondant au pixel corrélé de la deuxième grille de pixels.

11. Le procédé de la revendication 9 ou 10, dans lequel chaque pièce atomique présente une taille de 4 par 4 pixels, et dans lequel la première dimension de $F_1$ est 4 x $H_1'$ et la deuxième dimension de $F_1$ est 4 x $W_1'$.

12. Le procédé de l'une quelconque des revendications 4 à 11, dans lequel $C^0$ est un tenseur à 4 dimensions et les troisième et quatrièmes dimensions de $C^0$ correspondent aux première et deuxième dimensions de $F_2$, et dans lequel, pour chaque n entre 0 et L - 1, $C^{n+1}$ est un tenseur à 4 dimensions et une génération de $C^{n+1}$ comprend une exécution d'un sous-échantillonnage à 2 dimensions de $C^n$ de sorte que les troisième et quatrième dimensions de $C^{n+1}$ sont chacune réduites par un facteur prédéterminé comparées aux troisième et quatrième dimensions de $C^n$.

13. Le procédé de l'une quelconque des revendications 4 à 12, dans lequel une génération de $C^n$, pour chaque n entre 1 et $L$, comprend une exécution d'une transformation de rectification pour chaque corrélation de niveau n de $C^n$.

14. Le procédé de l'une quelconque des revendications 4 à 13, dans lequel les descripteurs optimaux d'image identifient des correspondances entre des parties de la première image et la deuxième image décrivant une scène avec un contenu visuel similaire mais des points de vue différents ou des conditions d'éclairage différentes.

15. Procédé mis en œuvre sur un ordinateur pour identifier des correspondances entre des images d'une paire d'entrée, le procédé comprenant :

une réception de la paire d'images d'entrée incluant une première image d'entrée et une deuxième image d'entrée ;
un traitement de la paire d'images d'entrée avec un réseau neuronal entraîné par une exécution d'un procédé d'apprentissage non supervisé de descripteurs locaux d'image selon l'une des revendications 1 à 14, le réseau neuronal entraîné générant des descripteurs locaux d'image pour la paire d'images d'entrée ;
une extraction de correspondances entre des parties de la paire d'images d'entrée selon les descripteurs d'image, chaque correspondance extraite mappant une partie de la première image d'entrée sur une partie de la deuxième image d'entrée ;
une détermination avec les correspondances extraites qu'une véritable adéquation existe ou non entre les images de la paire d'entrée, une véritable correspondance existant entre les images de la paire d'entrée lorsque des parties correspondantes de la paire d'images décrivent une même scène ; et
une spécification en sortie qu'une véritable adéquation existe ou non entre les images de la paire.

16. Système comprenant :

une unité de traitement ; et
une mémoire connectée à l'unité de traitement, dans lequel la mémoire comprend des instructions exécutables par un ordinateur qui, lorsqu'exécutées par l'unité de traitement, font exécuter à l'unité de traitement un procédé selon l'une des revendications 1 à 15.

17. Un ou plusieurs supports lisibles par un ordinateur présentant des instructions lisibles par un ordinateur stockées sur celui-ci qui, lorsqu'exécutées par une unité de traitement, font exécuter à l'unité de traitement un procédé selon l'une des revendications 1 à 15.

FIG. 1

FIG. 2

EP 4 254 354 B1

FIG. 3

FIG. 4

EP 4 254 354 B1

500

Obtaining a pair of images depicting a same scene, the pair of images comprising a first image and a second image ~510

Applying a neural network having an initial set of parameters to the first and the second image to generate a feature map $F_1$ for the first image and a feature map $F_2$ for the second image ~520

Determining an initial correlation volume $C^0$ based on $F_1$ and $F_2$ ~530

Determining a high-level correlation volume $C^L$ based on $C^0$ by iterative pyramid construction ~540

Determining a uniqueness matching loss for $F_1$ and $F_2$ based on $C^L$ ~550

Training the neural network by optimizing a loss function based on the uniqueness matching loss to generate an optimized set of parameters ~560

FIG. 5

600

```
┌─────────────────────────────────────┐
│     Applying the trained neural network     │─── 610
│       to a first new image to generate a    │
│   first trained feature map comprising a first grid │
│        of trained local image descriptors    │
└─────────────────────────────────────┘
                    │
                    ▼
┌─────────────────────────────────────┐
│     Applying the trained neural network     │─── 620
│    to a second new image to generate a second  │
│   trained feature map comprising a second grid  │
│         of trained local image descriptors    │
└─────────────────────────────────────┘
                    │
                    ▼
┌─────────────────────────────────────┐
│    Identifying a correspondence between a    │─── 630
│      portion of the first new image and     │
│       a portion of the second new image     │
│       based on the first and second grids of   │
│          trained local image descriptors    │
└─────────────────────────────────────┘
```

FIG. 6

FIG. 7

EP 4 254 354 B1

FIG. 8

EP 4 254 354 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022028110 A1

- US 11176425 B2

**Non-patent literature cited in the description**

- **LOWE**. Object recognition from local scale invariant features. *ICCV*, 1999
- **RUBLEE et al.** ORB: an efficient alternative to SIFT or SURF. *ICCV*, 2011
- **LI** ; **SNAVELY**. Megadepth: Learning single view depth prediction from internet photos. *CVPR*, 2018
- **WANG et al.** Learning feature descriptors using camera pose supervision. *ECCV*, 2020
- **TRUONG et al.** Warp consistency of unsupervised learning of dense correspondences. *ICCV*, 2021
- **ZHOU et al.** Joint image set alignment by weaving consistent, pixel-wise correspondences. *CPVR*, 2015
- **YANG et al.** MONET: multiview semi-supervised keypoint detection via epipolar divergence. *ICCV*, 2019
- **REVAUD JEROME**. *DeepMatching: Hierarchical Deformable Dense Matching*
- **REVAUD et al.** Hierarchical deformable dense matching. *IJCV*, 2016
- **REVAUD et al.** R2D2: repeatable and reliable detector and descriptor. *NeurIPS*, 2019
- **DETONE et al.** Self-supervised interest point detection and description. *CVPR Workshops*, 2018

- **RADENOVIC et al.** Revisiting Oxford and Paris: Large-scale image retrieval benchmarking. *CVPR*, 2018
- **BALNATS et al.** A Benchmark and evaluation of handcrafted and learned local descriptors. *CVPR*, 2017
- **SCHÖPS et al.** *A multi-view stereo benchmark*
- **ZHANG et al.** Reference pose generation for long-term visual localization via learned features and view synthesis. *IJCV*, 2021
- **REVAUD et al.** Learning with average precision: Training image retrieval with a listwise loss. *ICCV*, 2019
- **REVAUD et al.** DeepMatching: Hierarchical deformable dense matching. *IJCV*, 2016
- **JIANG et al.** Cotr: Correspondence transformer for matching across images. *ICCV*, 2021
- **HONG** ; **KIM**. Deep matching prior: Test-time optimization for dense correspondence. *ICCV*, 2021
- **DUSMANU**. D2-Net: A trainable CNN for joint description and detection of local features. *CVPR*, 2019
- **ROCCO et al.** Neighbourhood consensus network. *NeurIPS*, 2018
- **MELEKHOV et al.** Digging into self-supervised learning of feature descriptors. *3DV*, 2021